# EUROPEAN PATENT APPLICATION

(11) **EP 4 780 127 A1**
(43) Date of publication of application: **22.07.2026**
(21) Application number: 24870250.8
(22) Date of filing: 23.08.2024
(51) Int. Cl.: H04W 76/10

(54) **COMMUNICATION METHOD AND RELATED DEVICE**

(30) Priority: 27.09.2023 CN 202311263011
(71) Applicant: HUAWEI TECHNOLOGIES CO., LTD., Shenzhen 518129 (CN)
(72) Inventor: ZHU, Shichao, Shenzhen, Guangdong 518129 (CN); ZHU, Yuanping, Shenzhen, Guangdong 518129 (CN); SUN, Fei, Shenzhen, Guangdong 518129 (CN); SHI, Yulong, Shenzhen, Guangdong 518129 (CN)
(74) Representative: Maiwald GmbH
(86) International application number: PCT/CN2024/114212
(87) International publication number: WO 2025/066704

(57) **Abstract**

A communication method and a related device are provided, to determine, based on information sent by a distributed unit (distributed unit, DU) connected to a mobile integrated access and backhaul (mobile integrated access and backhaul, mIAB) node, an identifier of a first central unit (central unit, CU) connected to a mobile terminal (mobile terminal, MT) in the mIAB node, and implement data transmission of the mIAB node in a topology of the first CU based on the identifier of the first CU. In the method, the DU determines first information, where the first information is used to determine the identifier of the first CU, the DU connected to the first CU includes a first cell, the first cell is a cell supporting mIAB node access, and the identifier of the first CU is used to set up data transmission in the topology of the first CU for an mIAB node accessing the first cell; and the DU sends the first information.

## Description

This application claims priority to Chinese Patent Application No. 202311263011.4, filed with the China National Intellectual Property Administration on September 27, 2023, and entitled "COMMUNICATION METHOD AND RELATED DEVICE", which is incorporated herein by reference in its entirety.

### TECHNICAL FIELD

This application relates to the field of wireless technologies, and in particular, to a communication method and a related device.

### BACKGROUND

In a communication system, a wireless transmission solution can be used for both an access link (Access Link) and a backhaul link (Backhaul Link) by using an integrated access and backhaul (integrated access and backhaul, IAB) technology, to reduce fiber deployment and reduce costs.

Currently, an IAB network architecture may include an IAB donor node (IAB donor node) and an IAB node (IAB node). One IAB node may include a mobile terminal (mobile terminal, MT) and a distributed unit (distributed unit, DU). For the IAB node, the IAB node may implement data transmission by using a communication connection between the IAB node and a central unit (central unit, CU).

In addition, one communication connection may be set up between the DU in the IAB node and a CU, and another communication connection may be set up between the MT in the IAB node and the CU. For example, the communication connection may be used for data transmission of a child node (for example, a terminal device or an MT in a next-hop IAB node) of the IAB node, and the another communication connection may be used for data transmission of the MT in the IAB node. Usually, the CU connected to the DU in the IAB node and the CU connected to the MT in the IAB node are a same CU.

However, to improve flexibility of network deployment, the CU connected to the DU in the IAB node and the CU connected to the MT in the IAB node may not be the same CU. In this case, how to implement data transmission of the IAB node is a technical problem to be urgently resolved.

### SUMMARY

This application provides a communication method and a related device, to determine, based on information sent by a DU connected to a mobile integrated access and backhaul (mobile integrated access and backhaul, mIAB) node, an identifier of a first CU connected to an MT in the mIAB node, and implement data transmission of the mIAB node in a topology of the first CU based on the identifier of the first CU.

A first aspect of this application provides a communication method. The method is performed by a DU, the method is performed by a part of components (for example, a processor, a chip, or a chip system) in the DU, or the method may be implemented by a logical module or software that can implement all or a part of functions of the DU. In the first aspect and possible implementations of the first aspect, an example in which the communication method is performed by the DU is used for description. In the method, the DU determines first information, where the first information is used to determine an identifier of a first CU, the DU connected to the first CU includes a first cell, the first cell is a cell supporting mIAB node access, and the identifier of the first CU is used to set up data transmission in a topology of the first CU for an mIAB node accessing the first cell; and the DU sends the first information.

Based on the foregoing technical solution, the first information sent by the DU is used to determine the identifier of the first CU connected to the DU, and the identifier of the first CU is used to set up data transmission in the topology of the first CU for the mIAB node accessing the first cell. The first cell included in the DU is a cell supporting mIAB node access, in other words, the first CU connected to the DU is a CU connected to an MT in the mIAB node. In other words, after the DU sends the first information, the MT in the mIAB node can determine the identifier of the first CU based on the first information, and subsequently, a DU in the mIAB node can set up data transmission in the topology of the first CU based on the identifier of the first CU. Therefore, when a CU connected to the DU in the mIAB node and the CU connected to the MT in the mIAB node are not a same CU, the mIAB node can determine, based on the information sent by the DU connected to the mIAB node, the identifier of the first CU connected to the MT in the mIAB node, and implement data transmission of the mIAB node in the topology of the first CU based on the identifier of the first CU.

In this application, the mIAB node may be understood as an IAB node having a mobility capability. For example, a ground is used as a frame of reference, and the mIAB node may be an IAB node, for example, a vehicle-mounted device or a mobile station, that may move relative to the ground. The mIAB node may be replaced with the IAB node having the mobility capability, an IAB node having a mobility attribute, or the like. Under a condition that an IAB node has the mobility capability (or the mobility attribute), or in a process in which an IAB node moves, the IAB node may be referred to as an mIAB node. Correspondingly, an mIAB node having the mobility capability (or the mobility attribute) may not move (for example, no displacement is generated relative to the ground as the frame of reference). Alternatively, an mIAB node having the mobility capability (or the mobility attribute) may have not yet sent indication information indicating that the node is an mIAB node. In this case, the mobility attribute of the mIAB node may be considered as an attribute or a capability of the mIAB node, that is, the mIAB node may also be referred to as an IAB node (or a common IAB node, a stationary IAB node, or the like). In other words, the mIAB node in this application may be replaced with the IAB node (or the common IAB node, the stationary IAB node, or the like).

Optionally, the identifier of the first CU may be an identifier of a network device in which the first CU is located. For example, in a new radio (new radio, NR) system, the network device in which the first CU is located may be a gNB, in other words, the identifier of the network device in which the first CU is located may be an identifier of the gNB (for example, a gNB ID and/or an IP address).

It should be understood that the DU includes one or more cells (for example, the first cell). It may be understood as that a signal of the one or more cells is received and sent through the DU. In other words, that the DU includes the one or more cells may be replaced with the following: The DU corresponds to the one or more cells, the one or more cells are generated by the DU, the DU generates the one or more cells, and so on.

It should be understood that the CU connected to the MT in the mIAB node is the first CU, and the connection between the MT and the first CU may be a radio resource control (radio resource control, RRC) connection; and the CU connected to the DU in the mIAB node may be a second CU, and the connection between the DU and the second CU may be an F1 connection. Correspondingly, for the mIAB node, the F1 connection is terminated at the second CU, in other words, the second CU may be referred to as an F1-terminating central unit (F1-terminating CU) for the mIAB node, and the first CU may be referred to as a non-F1-terminating central unit (non-F1-terminating CU) for the mIAB node, or the first CU may be referred to as a radio resource control terminating central unit (RRC terminating CU) for the mIAB node.

It should be understood that there may be N-hop (where N is a natural number) intermediate nodes (that is, N-hop IAB intermediate nodes) between the mIAB node and an IAB donor node. When N is 0, the DU sending the first information is an IAB donor DU (IAB donor DU) in the IAB donor node. When N is 1, the DU sending the first information is a DU in an intermediate node between the IAB donor node and the mIAB node. When N is greater than 1, the DU sending the first information is a DU in an intermediate node connected to the mIAB node among N intermediate nodes between the IAB donor node and the mIAB node, that is, there may be (N-1)-hop intermediate nodes between the DU in the intermediate node connected to the mIAB node and the IAB donor node.

It should be noted that, that the identifier of the first CU is used to set up data transmission in the topology of the first CU for the mIAB node accessing the first cell may be understood as follows: Data transmission between the DU in the mIAB node and the second CU traverses the topology of the first CU, and the mIAB node may send the identifier of the first CU to the second CU, so that the second CU can perform interaction (for example, interaction in a mobile integrated access and backhaul transport migration management (IAB TRANSPORT MIGRATION MANAGEMENT) procedure) with the first CU based on the identifier of the first CU, and a resource used to transmit traffic between the DU in the mIAB and the second CU can be set up in the topology of the first CU through the interaction procedure.

For example, the DU connected to the mIAB node (that is, the DU sending the first information) is an IAB donor DU. A data transmission path between the DU in the mIAB node and the second CU may include: DU in the mIAB node→MT in the mIAB node→IAB donor DU connected to the mIAB node→second CU.

For another example, the DU connected to the mIAB node (that is, the DU sending the first information) is not the IAB donor DU. A data transmission path between the DU in the mIAB node and the second CU may include: DU in the mIAB node→MT in the mIAB node→DU connected to the mIAB node→N-hop intermediate nodes (where N is a natural number)→IAB donor DU→second CU.

In the foregoing examples, the IAB donor DU and the first CU are located in an IAB donor node connected to the MT. In the data transmission path between the DU in the mIAB node and the second CU, a path involving the IAB donor DU may be negotiated and determined through procedure interaction between the first CU and the second CU (where for example, the procedure may be the mobile integrated access and backhaul transport migration management (IAB TRANSPORT MIGRATION MANAGEMENT) procedure). Therefore, a manner in which the DU connected to the mIAB node sends the first information can cause the mIAB node to determine the identifier of the first CU based on the first information, and cause the first CU and the second CU to implement interaction in the foregoing procedure based on the identifier of the first CU, so that data transmission of the mIAB node is implemented through the data transmission path.

Optionally, data transmission may be performed on a path between the IAB donor DU and the second CU over an internet protocol (internet protocol, IP) network.

Optionally, that the DU sends the first information includes: The DU sends the first information under a condition that the DU determines that the first cell is a cell supporting mIAB node access (or under a condition that a broadcast message sent by the DU indicates that the first cell is a node supporting the mIAB node). In other words, under a condition that the first cell in the DU supports mIAB node access, the DU may send the identifier used to determine the first CU, so that after accessing the cell supporting mIAB node access, the mIAB node can determine the identifier of the first CU based on the first information, thereby implementing data transmission of the mIAB node in the topology of the first CU.

Further, optionally, in addition to the first cell, cells included in the DU may further include a second cell. Under a condition that the DU determines that the second cell does not support mIAB node access, the DU may not send first information corresponding to the second cell. In other words, the second cell does not support mIAB node access, and in this case, the DU does not need to send information used to determine an identifier of a CU connected to an MT in an mIAB node accessing the second cell.

In a possible implementation of the first aspect, the first information is carried in a broadcast system message of the first cell.

Optionally, the broadcast system information may be a system information block (system information block, SIB), for example, a SIB 1.

Based on the foregoing technical solution, the first information sent by the DU may be carried in the broadcast system message of the first cell, and the first information is transmitted in a broadcast manner, so that a plurality of mIAB nodes can all receive the first information sent in the broadcast manner, thereby reducing overheads.

In a possible implementation of the first aspect, before sending the first information, the method further includes: The DU receives a first message, where the first message indicates that setup of a radio resource control (radio resource control, RRC) connection of a first IAB node is complete, and the first message includes indication information indicating that the first IAB node is an mIAB node. The DU determines, based on the first message, to send the first information.

It should be understood that, after receiving the first message, the DU may also read the mIAB indication information in the first message because the DU may have a specific RRC capability. Alternatively, the DU may subsequently forward the first message to the first CU, so that the first CU determines, based on the first message, that the setup of the RRC connection of the first IAB node is complete.

Optionally, the first message may be referred to as a message 5 (message 5, MSG5) or an RRC setup complete (RRCSetupComplete) message.

Based on the foregoing technical solution, after the first IAB node accesses the DU, the DU may receive the message indicating that the setup of the RRC connection of the first IAB node is complete. In addition, the first message includes the indication information indicating that the first IAB node is an mIAB node, so that the DU determines that there is an mIAB node that has accessed the first CU through the DU. Therefore, the DU can determine, based on the first message, to send the first information, so that the mIAB node can implement data transmission of the mIAB node in the topology of the first CU based on the first information.

Optionally, the first cell is any cell that is in the DU and that supports mIAB node access; or the first cell is a cell that is in the DU and that is accessed by the mIAB node.

In a possible implementation of the first aspect, before the DU sends the first information, the method further includes: The DU receives second information, where the second information is from the first CU, and the second information satisfies at least one of the following:
the second information indicates that the mIAB node is allowed to access the first cell;
the second information indicates that the mIAB node is not barred from accessing the first cell; and
the second information indicates to send the first information.

The DU determines, based on the second information, to send the first information.

Based on the foregoing technical solution, the DU may receive, from the first CU, the second information satisfying the at least one of the foregoing items, so that the DU determines, based on the indication of the first CU, to send the first information.

In a possible implementation of the first aspect, the second information is carried in a gNB-CU configuration update message GNB-CU CONFIGURATION UPDATE. For example, a value of a carried mobile IAB barred information element is not barred, indicating that mIAB node access is allowed or not barred.

In a possible implementation of the first aspect, before the DU determines the first information, the method further includes: receiving indication information that indicates the identifier of the first CU or an identifier length of the identifier of the first CU and that is configured by a network management system; and/or receiving, from the first CU, the indication information indicating the identifier of the first CU or the identifier length of the identifier of the first CU.

Based on the foregoing technical solution, the DU may learn of the identifier of the first CU or the identifier length of the identifier of the first CU in a manner of the configuration by the network management system or a manner of receiving configuration from the first CU, so that the DU can send the first information based on the identifier of the first CU or the identifier length of the identifier of the first CU.

In a possible implementation of the first aspect, that the DU determines the first information includes: The DU receives the first information, where the first information is carried in an RRC message.

Optionally, that the first information is carried in the RRC message may be replaced with the following: The first information is carried in a unicast message.

It should be understood that because a communication protocol stack supported by the DU includes a PHY layer, a MAC layer, an RLC layer, and the like, and does not include an RRC layer, the first information received by the DU and the first information sent by the DU may be messages encapsulated at the PHY layer/MAC layer/RLC layer.

Based on the foregoing technical solution, the DU may receive the first information from the first CU, where the first information is carried in the RRC message, so that the DU can forward the first information, and an mIAB node accessing the DU obtains the first information.

In a possible implementation of the first aspect, before the DU receives the first information, the method further includes: The DU sends first indication information, where the first indication information indicates that system information of the first cell does not include the first information; and/or the DU broadcasts the system information of the first cell, where the system information of the first cell does not include the first information.

Based on the foregoing technical solution, before the DU receives the first information, the DU may send the first indication information and/or the system information of the first cell, so that the first CU can determine, based on the first indication information and/or the system information of the first cell, that the system information of the first cell does not include the first information. Then, after the first CU determines that the system information of the first cell does not include the first information, the first CU may send the second information to the DU (or the first CU sends the first information carried in the RRC message), so that the mIAB node accessing the DU can obtain the first information, and implement data transmission of the mIAB node in the topology of the first CU based on the first information.

In a possible implementation of the first aspect, the first information includes at least one of the following:
the identifier of the first CU;
the length of the identifier of the first CU, where the length of the identifier of the first CU is used to determine the identifier of the first CU based on a second identifier, and the second identifier includes the identifier of the first CU and an identifier of the first cell; and
a length of the identifier of the first cell, where the length of the identifier of the first cell is used to determine the identifier of the first CU based on the second identifier.

Optionally, in the new radio (new radio, NR) system, the second identifier may be a new radio cell global identifier (new radio cell global identifier, NCGI).

Based on the foregoing technical solution, the first information may be implemented by using the at least one of the foregoing items, to improve flexibility of implementing the solution.

Optionally, compared with an implementation in which the first information includes the identifier of the first CU, a case in which the first information is the length of the identifier of the first CU (for example, the first information is carried in a gNB-ID-Length information element in a SIB 1) can reduce a quantity of bits occupied by the first information, thereby reducing overheads.

A second aspect of this application provides a communication method. The method is performed by a first CU, the method is performed by a part of components (for example, a processor, a chip, or a chip system) in the first CU, or the method may be implemented by a logical module or software that can implement all or a part of functions of the first CU. In the second aspect and possible implementations of the second aspect, an example in which the communication method is performed by the first CU is used for description. In the method, the first CU determines second information, where the second information satisfies at least one of the following:
the second information indicates that an mIAB node is allowed to access a serving cell;
the second information indicates that the mIAB node is not barred from accessing the serving cell; and
the second information indicates to send first information.

The first CU sends the second information, where the second information is used to determine to send the first information, the first information is carried in a broadcast system message of the serving cell, the first information is used to determine an identifier of the first CU, and a DU connected to the first CU includes the serving cell.

Based on the foregoing technical solution, the second information sent by the first CU is used to determine to send the first information, in other words, after receiving the second information, the DU can send the first information based on the indication of the second information. The first information is used to determine the identifier of the first CU connected to the DU, and the identifier of the first CU is used to set up data transmission in a topology of the first CU for an mIAB node accessing a first cell. In other words, after the DU sends the first information, an MT in an mIAB node accessing the DU can determine the identifier of the first CU based on the first information, and subsequently, a DU in the mIAB node can set up data transmission in the topology of the first CU based on the identifier of the first CU. Therefore, when a CU connected to the DU in the mIAB node and a CU connected to the MT in the mIAB node are not a same CU, the mIAB node can determine, based on the information sent by the DU connected to the mIAB node, the identifier of the first CU connected to the MT in the mIAB node, and implement data transmission of the mIAB node in the topology of the first CU based on the identifier of the first CU.

In a possible implementation of the second aspect, the method further includes: The first CU sends indication information indicating the identifier of the first CU or an identifier length of the identifier of the first CU.

Based on the foregoing technical solution, the first CU may further send, to the DU, the indication information indicating the identifier of the first CU or the identifier length of the identifier of the first CU, so that the DU can determine the identifier of the first CU or the identifier length of the identifier of the first CU based on the indication information, and then the DU can send the first information based on the identifier of the first CU or the identifier length of the identifier of the first CU.

In a possible implementation of the second aspect, the first information includes at least one of the following:
the identifier of the first CU;
the length of the identifier of the first CU, where the length of the identifier of the first CU is used to determine the identifier of the first CU based on a second identifier, and the second identifier includes the identifier of the first CU and an identifier of the serving cell; and
a length of the identifier of the serving cell, where the length of the identifier of the serving cell is used to determine the identifier of the first CU based on the second identifier.

Optionally, in an NR system, the second identifier may be an NCGI.

Based on the foregoing technical solution, the first information may be implemented by using the at least one of the foregoing items, to improve flexibility of implementing the solution.

Optionally, compared with an implementation in which the first information includes the identifier of the first CU, a case in which the first information is the length of the identifier of the first CU (for example, the first information is carried in a gNB-ID-Length information element in a SIB 1) can reduce a quantity of bits occupied by the first information, thereby reducing overheads.

In a possible implementation of the second aspect, that the first CU determines the second information includes: The first CU determines the second information based on at least one of the following:
the first CU receives first indication information from the DU, where the first indication information indicates that system information of the serving cell does not include the first information;
the first CU receives second indication information from a core network element, where the second indication information indicates that authorization of the mIAB node succeeds;
the first CU receives the second indication information and/or third indication information from a source CU for an MT in a first IAB node, where the third indication information indicates that the first IAB node is an mIAB node, and the first CU is a target CU for the MT in the first IAB node;
the first CU determines that the first CU is not an F1-terminating central unit (F1-terminating CU) for the first IAB node;
the first CU receives fourth indication information from a third CU, where the fourth indication information indicates that the third CU is an F1-terminating CU for the first IAB node;
the first CU receives fifth indication information from the MT in the first IAB node, where the fifth indication information indicates that the first CU is not an F1-terminating CU for the first IAB node;
the first CU determines that a DU in the first IAB node is to perform DU migration; and
the first CU receives sixth indication information from the MT in the first IAB node or the F1-terminating CU for the first IAB node, where the sixth indication information indicates to request the first information.

Based on the foregoing technical solution, when the at least one of the foregoing items is satisfied, the first CU may determine that the DU connected to the first CU may be accessed by the mIAB node. Therefore, the first CU may send the second information, so that after the second information is received, the first information can be sent based on the indication of the second information, and after accessing the DU, the mIAB node can determine, based on the first information, the identifier of the first CU connected to the MT in the mIAB node, and implement data transmission of the mIAB node in the topology of the first CU based on the identifier of the first CU.

A third aspect of this application provides a communication method. The method is performed by a first CU, the method is performed by a part of components (for example, a processor, a chip, or a chip system) in the first CU, or the method may be implemented by a logical module or software that can implement all or a part of functions of the first CU. In the third aspect and possible implementations of the third aspect, an example in which the communication method is performed by the first CU is used for description. In the method, the first CU determines first information based on at least one of the following, where the first information is used to determine an identifier of the first CU, a DU connected to the first CU includes a serving cell of a first integrated access and backhaul IAB node, and the first IAB node is an mIAB node:
the first CU receives first indication information from the DU, where the first indication information indicates that system information of the serving cell does not include the first information;
the first CU receives second indication information from a core network element, where the second indication information indicates that authorization of the mIAB node succeeds;
the first CU receives the second indication information and/or third indication information from a source CU for an MT in the first IAB node, where the third indication information indicates that the first IAB node is an mIAB node, and the first CU is a target CU for the MT in the first IAB node;
the first CU determines that the first CU is not an F1-terminating central unit (F1-terminating CU) for the first IAB node;
the first CU receives fourth indication information from a third CU, where the fourth indication information indicates that the third CU is an F1-terminating CU for the first IAB node;
the first CU receives fifth indication information from the MT in the first IAB node, where the fifth indication information indicates that the first CU is not an F1-terminating CU for the first IAB node;
the first CU determines that a DU in the first IAB node is to perform DU migration; and
the first CU receives sixth indication information from the MT in the first IAB node or the F1-terminating CU for the first IAB node, where the sixth indication information indicates to request the first information.

The first CU sends the first information, where the first information is carried in an RRC message.

Based on the foregoing technical solution, when the at least one of the foregoing items is satisfied, the first CU may determine that the DU connected to the first CU may be accessed by the mIAB node. Therefore, the first CU may send, to the first IAB node through the DU, the first information used to determine the identifier of the first CU, where the first information is carried in the RRC message, and the first IAB node is an mIAB node. The identifier of the first CU is used to set up data transmission in a topology of the first CU for an mIAB node accessing a first cell. In other words, after the first CU sends the first information to the first IAB node through the DU, the MT in the first IAB node accessing the DU can determine the identifier of the first CU based on the first information, and subsequently, the DU in the first IAB node can set up data transmission in the topology of the first CU based on the identifier of the first CU. Therefore, when a CU connected to a DU in the mIAB node and a CU connected to an MT in the mIAB node are not a same CU, the mIAB node can determine, based on the information sent by the DU connected to the mIAB node, the identifier of the first CU connected to the MT in the mIAB node, and implement data transmission of the mIAB node in the topology of the first CU based on the identifier of the first CU.

Optionally, the second indication information from the core network element is carried in any one of the following: an initial context setup request (INITIAL CONTEXT SETUP REQUEST) message, a path switch request acknowledgment (PATH SWITCH REQUEST ACK) message, and a user equipment context modification request (UE CONTEXT MODIFICATION REQUEST) message.

Further, optionally, the core network element may include an access and mobility management function (access and mobility management function, AMF) network element.

In a possible implementation of the third aspect, the first information includes at least one of the following:
the identifier of the first CU;
a length of the identifier of the first CU, where the length of the identifier of the first CU is used to determine the identifier of the first CU based on a second identifier, and the second identifier includes the identifier of the first CU and an identifier of the serving cell; and
a length of the identifier of the serving cell, where the length of the identifier of the serving cell is used to determine the identifier of the first CU based on the second identifier.

Optionally, in an NR system, the second identifier may be an NCGI.

Based on the foregoing technical solution, the first information may be implemented by using the at least one of the foregoing items, to improve flexibility of implementing the solution.

Optionally, compared with an implementation in which the first information includes the identifier of the first CU, a case in which the first information is the length of the identifier of the first CU can reduce a quantity of bits occupied by the first information, thereby reducing overheads.

A fourth aspect of this application provides a communication method. The method is performed by a first IAB node, the method is performed by a part of components (for example, a processor, a chip, or a chip system) in the first IAB node, or the method may be implemented by a logical module or software that can implement all or a part of functions of the first IAB node. In the fourth aspect and possible implementations of the fourth aspect, an example in which the communication method is performed by the first IAB node is used for description. In the method, the first IAB node receives first information, where the first information is from a serving cell, the first information is used to determine an identifier of a first CU, a DU connected to the first CU includes the serving cell, and the serving cell supports mobile integrated access and backhaul mIAB node access. The first IAB node sends third information to a second CU connected to a DU in the first IAB node, where the third information includes the identifier of the first CU, the identifier of the first CU is used to set up data transmission in a topology of the first CU for the first IAB node, and the first IAB node is an mIAB node.

Based on the foregoing technical solution, the first information received by the first IAB node is used to determine the identifier of the first CU connected to the DU, and the identifier of the first CU is used to set up data transmission in the topology of the first CU for an mIAB node accessing a first cell. In other words, the first IAB node is used as the mIAB node, an MT in the first IAB node can determine the identifier of the first CU based on the first information, and subsequently, the DU in the first IAB node can set up data transmission in the topology of the first CU based on the identifier of the first CU. Therefore, when a CU connected to the DU in the first IAB node and a CU connected to the MT in the first IAB node are not a same CU, the first IAB node can determine, based on the information sent by the DU connected to the first IAB node, the identifier of the first CU connected to the MT in the first IAB node, and implement data transmission of the first IAB node in the topology of the first CU based on the identifier of the first CU.

In a possible implementation of the fourth aspect, the first information is carried in a system information broadcast of the serving cell.

Optionally, the broadcast system information may be a system information block (system information block, SIB), for example, a SIB 1.

Based on the foregoing technical solution, the first information received by the first IAB node may be carried in the broadcast system message of the first cell, and the first information is transmitted in a broadcast manner, so that a plurality of mIAB nodes can all receive the first information sent in the broadcast manner, thereby reducing overheads.

In a possible implementation of the fourth aspect, before the first IAB node receives the first information, the method further includes: The first IAB node sends a first message, where the first message indicates that setup of a radio resource control RRC connection of the first IAB node is complete, and the first message includes indication information indicating that the first IAB node is a mobile IAB node.

Optionally, the first message may be referred to as a message 5 (message 5, MSG5).

Based on the foregoing technical solution, after the first IAB node accesses the DU, the first IAB node may send the message indicating that the setup of the RRC connection of the first IAB node is complete. In addition, the first message includes the indication information indicating that the first IAB node is an mIAB node, so that the DU determines that there is an mIAB node that has accessed the first CU through the DU. Therefore, the DU can determine, based on the first message, to send the first information, so that the mIAB node can implement data transmission of the mIAB node in the topology of the first CU based on the first information.

In a possible implementation of the fourth aspect, the first information is carried in an RRC message.

Based on the foregoing technical solution, the first information received by the first IAB node is carried in the RRC message, so that the DU can forward the first information, and the first IAB node accessing the DU obtains the first information.

Optionally, before the first IAB node sends the first message, the method further includes: The first IAB node receives a system information broadcast of the serving cell, where the system information broadcast of the serving cell does not include the first information.

In a possible implementation of the fourth aspect, the first information includes at least one of the following:
the identifier of the first CU;
a length of the identifier of the first CU, where the length of the identifier of the first CU is used to determine the identifier of the first CU based on a second identifier, and the second identifier includes the identifier of the first CU and an identifier of the serving cell; and
a length of the identifier of the serving cell, where the length of the identifier of the serving cell is used to determine the identifier of the first CU based on the second identifier.

Optionally, in an NR system, the second identifier may be an NCGI.

Based on the foregoing technical solution, the first information may be implemented by using the at least one of the foregoing items, to improve flexibility of implementing the solution.

Optionally, compared with an implementation in which the first information includes the identifier of the first CU, a case in which the first information is the length of the identifier of the first CU (for example, the first information is carried in a gNB-ID-Length information element in a SIB 1) can reduce a quantity of bits occupied by the first information, thereby reducing overheads.

A fifth aspect of this application provides a communication apparatus. The apparatus is a terminal device, the apparatus is a part of components (for example, a processor, a chip, or a chip system) in the DU, or the apparatus may be a logical module or software that can implement all or a part of functions of the DU. In the fifth aspect and possible implementations of the fifth aspect, an example in which the communication apparatus is the DU is used for description.

The apparatus includes a transceiver unit and a processing unit. The processing unit is configured to determine first information, where the first information is used to determine an identifier of a first central unit CU, the distributed unit DU connected to the first CU includes a first cell, the first cell is a cell supporting mobile integrated access and backhaul mIAB node access, and the identifier of the first CU is used to set up data transmission in a topology of the first CU for an mIAB node accessing the first cell. The transceiver unit is configured to send the first information.

In a possible implementation of the fifth aspect, the first information is carried in a broadcast system message of the first cell.

In a possible implementation of the fifth aspect, the transceiver unit is further configured to receive a first message, where the first message indicates that setup of a radio resource control RRC connection of a first IAB node is complete, and the first message includes indication information indicating that the first IAB node is an mIAB node. The processing unit is specifically configured to determine, based on the first message, to send the first information.

In a possible implementation of the fifth aspect, the transceiver unit is further configured to receive second information, where the second information is from the first CU, and the second information satisfies at least one of the following:
the second information indicates that the mIAB node is allowed to access the first cell;
the second information indicates that the mIAB node is not barred from accessing the first cell; and
the second information indicates to send the first information.

The transceiver unit is further configured to determine, based on the second information, to send the first information.

In a possible implementation of the fifth aspect, the first cell is any cell that is in the DU and that supports mIAB node access; or the first cell is a cell that is in the DU and that is accessed by the mIAB node.

In a possible implementation of the fifth aspect, the transceiver unit is further configured to receive indication information that indicates the identifier of the first CU or an identifier length of the identifier of the first CU and that is configured by a network management system; and/or the transceiver unit is further configured to receive, from the first CU, the indication information indicating the identifier of the first CU or the identifier length of the identifier of the first CU.

In a possible implementation of the fifth aspect, that the processing unit is configured to determine the first information includes: The processing unit is specifically configured to receive the first information through the transceiver unit, where the first information is carried in an RRC message.

In a possible implementation of the fifth aspect, the transceiver unit is further configured to send first indication information, where the first indication information indicates that system information of the first cell does not include the first information; and/or the transceiver unit is further configured to broadcast the system information of the first cell, where the system information of the first cell does not include the first information.

In a possible implementation of the fifth aspect, the first information includes at least one of the following:
the identifier of the first CU;
the length of the identifier of the first CU, where the length of the identifier of the first CU is used to determine the identifier of the first CU based on a second identifier, and the second identifier includes the identifier of the first CU and an identifier of the first cell; and
a length of the identifier of the first cell, where the length of the identifier of the first cell is used to determine the identifier of the first CU based on the second identifier.

In the fifth aspect of embodiments of this application, the component modules of the communication apparatus may be further configured to perform the steps performed in the possible implementations of the first aspect, and implement corresponding technical effects. For details, refer to the first aspect. The details are not described herein again.

A sixth aspect of this application provides a communication apparatus. The apparatus is a first CU, the apparatus is a part of components (for example, a processor, a chip, or a chip system) in the first CU, or the apparatus may be a logical module or software that can implement all or a part of functions of the first CU. In the sixth aspect and possible implementations of the sixth aspect, an example in which the communication apparatus is the first CU is used for description.

The apparatus includes a transceiver unit and a processing unit. The processing unit is configured to determine second information, where the second information satisfies at least one of the following:
the second information indicates that an mIAB node is allowed to access a serving cell;
the second information indicates that the mIAB node is not barred from accessing the serving cell; and
the second information indicates to send first information.

The transceiver unit is configured to send the second information, where the second information is used to determine to send the first information, the first information is carried in a broadcast system message of the serving cell, the first information is used to determine an identifier of the first CU, and a DU connected to the first CU includes the serving cell.

In a possible implementation of the sixth aspect, the transceiver unit is further configured to send indication information indicating the identifier of the first CU or an identifier length of the identifier of the first CU.

In a possible implementation of the sixth aspect, the first information includes at least one of the following:
the identifier of the first CU;
the length of the identifier of the first CU, where the length of the identifier of the first CU is used to determine the identifier of the first CU based on a second identifier, and the second identifier includes the identifier of the first CU and an identifier of the serving cell; and
a length of the identifier of the serving cell, where the length of the identifier of the serving cell is used to determine the identifier of the first CU based on the second identifier.

In a possible implementation of the sixth aspect, that the processing unit determines the second information includes: The processing unit determines the second information based on at least one of the following:
the transceiver unit receives first indication information from the DU, where the first indication information indicates that system information of the serving cell does not include the first information;
the transceiver unit receives second indication information from a core network element, where the second indication information indicates that authorization of the mIAB node succeeds;
the transceiver unit receives the second indication information and/or third indication information from a source CU for an MT in a first IAB node, where the third indication information indicates that the first IAB node is an mIAB node, and the first CU is a target CU for the MT in the first IAB node;
the processing unit determines that the first CU is not an F1-terminating central unit F1-terminating CU for the first IAB node;
the transceiver unit receives fourth indication information from a third CU, where the fourth indication information indicates that the third CU is an F1-terminating CU for the first IAB node;
the transceiver unit receives fifth indication information from the MT in the first IAB node, where the fifth indication information indicates that the first CU is not an F1-terminating CU for the first IAB node;
the processing unit determines that a DU in the first IAB node is to perform DU migration; and
the transceiver unit receives sixth indication information from the MT in the first IAB node or the F1-terminating CU for the first IAB node, where the sixth indication information indicates to request the first information.

In the sixth aspect of embodiments of this application, the component modules of the communication apparatus may be further configured to perform the steps performed in the possible implementations of the second aspect, and implement corresponding technical effects. For details, refer to the second aspect. The details are not described herein again.

A seventh aspect of this application provides a communication apparatus. The apparatus is a first CU, the apparatus is a part of components (for example, a processor, a chip, or a chip system) in the first CU, or the apparatus may be a logical module or software that can implement all or a part of functions of the first CU. In the seventh aspect and possible implementations of the seventh aspect, an example in which the communication apparatus is the first CU is used for description.

The apparatus includes a transceiver unit and a processing unit. The processing unit is configured to determine first information based on at least one of the following, where the first information is used to determine an identifier of the first CU, a DU connected to the first CU includes a serving cell of a first integrated access and backhaul IAB node, and the first IAB node is an mIAB node:
the transceiver unit receives first indication information from the DU, where the first indication information indicates that system information of the serving cell does not include the first information;
the transceiver unit receives second indication information from a core network element, where the second indication information indicates that authorization of the mIAB node succeeds;
the transceiver unit receives the second indication information and/or third indication information from a source CU for an MT in the first IAB node, where the third indication information indicates that the first IAB node is an mIAB node, and the first CU is a target CU for the MT in the first IAB node;
the processing unit determines that the first CU is not an F1-terminating central unit F1-terminating CU for the first IAB node;
the transceiver unit receives fourth indication information from a third CU, where the fourth indication information indicates that the third CU is an F1-terminating CU for the first IAB node;
the transceiver unit receives fifth indication information from the MT in the first IAB node, where the fifth indication information indicates that the first CU is not an F1-terminating CU for the first IAB node;
the processing unit determines that a DU in the first IAB node is to perform DU migration; and
the transceiver unit receives sixth indication information from the MT in the first IAB node or the F1-terminating CU for the first IAB node, where the sixth indication information indicates to request the first information.

The transceiver unit is configured to send the first information, where the first information is carried in a radio resource control RRC message.

In a possible implementation of the seventh aspect, the second indication information from the core network element is carried in any one of the following: an initial context setup request INITIAL CONTEXT SETUP REQUEST message, a path switch request acknowledgment PATH SWITCH REQUEST ACK message, and a user equipment context modification request UE CONTEXT MODIFICATION REQUEST message.

In a possible implementation of the seventh aspect, the first information includes at least one of the following:
the identifier of the first CU;
a length of the identifier of the first CU, where the length of the identifier of the first CU is used to determine the identifier of the first CU based on a second identifier, and the second identifier includes the identifier of the first CU and an identifier of the serving cell; and
a length of the identifier of the serving cell, where the length of the identifier of the serving cell is used to determine the identifier of the first CU based on the second identifier.

In the seventh aspect of embodiments of this application, the component modules of the communication apparatus may be further configured to perform the steps performed in the possible implementations of the third aspect, and implement corresponding technical effects. For details, refer to the third aspect. The details are not described herein again.

An eighth aspect of this application provides a communication apparatus. The apparatus is a first IAB node, the apparatus is a part of components (for example, a processor, a chip, or a chip system) in the first IAB node, or the apparatus may be a logical module or software that can implement all or a part of functions of the first IAB node. In the eighth aspect and possible implementations of the eighth aspect, an example in which the communication apparatus is the first IAB node is used for description.

The apparatus includes a transceiver unit and a processing unit. The transceiver unit is configured to receive first information, where the first information is from a serving cell, the first information is used to determine an identifier of a first CU, a DU connected to the first CU includes the serving cell, and the serving cell supports mobile integrated access and backhaul mIAB node access. The processing unit is configured to determine the identifier of the first CU based on the first information. The transceiver unit is further configured to send third information to a second CU connected to a DU in the first IAB node, where the third information includes the identifier of the first CU, the identifier of the first CU is used to set up data transmission in a topology of the first CU for the first IAB node, and the first IAB node is an mIAB node.

In a possible implementation of the eighth aspect, the first information is carried in a system information broadcast of the serving cell.

In a possible implementation of the eighth aspect, the transceiver unit is further configured to send a first message, where the first message indicates that setup of a radio resource control RRC connection of the first IAB node is complete, and the first message includes indication information indicating that the first IAB node is a mobile IAB node.

In a possible implementation of the eighth aspect, the first information is carried in an RRC message.

In a possible implementation of the eighth aspect, the transceiver unit is further configured to receive a system information broadcast of the serving cell, where the system information broadcast of the serving cell does not include the first information.

In a possible implementation of the eighth aspect, the first information includes at least one of the following:
the identifier of the first CU;
a length of the identifier of the first CU, where the length of the identifier of the first CU is used to determine the identifier of the first CU based on a second identifier, and the second identifier includes the identifier of the first CU and an identifier of the serving cell; and
a length of the identifier of the serving cell, where the length of the identifier of the serving cell is used to determine the identifier of the first CU based on the second identifier.

In the eighth aspect of embodiments of this application, the component modules of the communication apparatus may be further configured to perform the steps performed in the possible implementations of the fourth aspect, and implement corresponding technical effects. For details, refer to the fourth aspect. The details are not described herein again.

A ninth aspect of embodiments of this application provides a communication apparatus, including at least one processor, where the at least one processor is configured to execute a program or instructions in a memory, to enable the apparatus to implement the method performed in the possible implementations of any one of the first aspect to the fourth aspect.

A tenth aspect of embodiments of this application provides a communication apparatus, including at least one logic circuit and an input/output interface, where the logic circuit is configured to perform the method performed in the possible implementations of any one of the first aspect to the fourth aspect.

An eleventh aspect of embodiments of this application provides a computer-readable storage medium, where the storage medium is configured to store one or more computer-executable instructions, and when the computer-executable instructions are executed by a processor, the processor performs the method in the possible implementations of any one of the first aspect to the fourth aspect.

A twelfth aspect of embodiments of this application provides a computer program product; and when a computer program in the computer program product is executed by a processor, the processor performs the method performed in the possible implementations of any one of the first aspect to the fourth aspect.

A thirteenth aspect of embodiments of this application provides a chip system, where the chip system includes at least one processor, configured to support a communication apparatus in implementing the method performed in the possible implementations of any one of the first aspect to the fourth aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, where the interface circuit provides program instructions and/or data for the at least one processor.

A fourteenth aspect of embodiments of this application provides a communication system, where the communication system includes the DU and the first IAB node in any one of the foregoing aspects and the implementations of the foregoing aspects.

Optionally, the communication system further includes the first CU in any one of the foregoing aspects and the implementations of the foregoing aspects.

It should be understood that, for technical effects brought by any design manner in the fifth aspect to the fourteenth aspect, refer to the technical effects brought by different design manners in the first aspect to the fourth aspect. Details are not described herein again.

### BRIEF DESCRIPTION OF DRAWINGS

FIG. 1 is a diagram of a communication system according to this application;
FIG. 2a is a diagram of an IAB communication scenario according to this application;
FIG. 2b is another diagram of an IAB communication scenario according to this application;
FIG. 2c is a diagram of an IAB communication protocol stack according to this application;
FIG. 2d is another diagram of an IAB communication protocol stack according to this application;
FIG. 2e is a diagram of an IAB network access procedure according to this application;
FIG. 2f is a diagram of IAB node migration;
FIG. 2g is another diagram of IAB node migration;
FIG. 2h is another diagram of IAB node migration;
FIG. 3 is a diagram of a communication method according to this application;
FIG. 4 is another diagram of a communication method according to this application;
FIG. 5a is another diagram of a communication method according to this application;
FIG. 5b is another diagram of a communication method according to this application;
FIG. 5c is another diagram of a communication method according to this application;
FIG. 6 is another diagram of a communication method according to this application;
FIG. 7 is a diagram of a communication apparatus according to this application;
FIG. 8 is another diagram of a communication apparatus according to this application; and
FIG. 9 is another diagram of a communication apparatus according to this application.

### DESCRIPTION OF EMBODIMENTS

First, some terms that may be involved in embodiments of this application are explained and described.
(1) Configuration and pre-configuration: In this application, both the configuration and the pre-configuration are used. The configuration means that a network device such as a base station or a server sends configuration information of some parameters or parameter values to a terminal by using a message or signaling, so that the terminal determines a communication parameter or a transmission resource based on the values or the information. Similar to the configuration, the pre-configuration may be a manner in which a network device such as a base station or a server sends parameter information or a value to a terminal by using a communication link or a carrier, or may be a manner in which a corresponding parameter or parameter value is defined in a standard or a related parameter or value is set in a terminal device in advance. This is not limited in this application. Further, these values and parameters may be changed or updated.
(2) In this application, "indicating" may include "directly indicating" and "indirectly indicating". When a piece of indication information is described as indicating A, it may be understood as that the indication information carries A, directly indicates A, or indirectly indicates A.

In this application, information indicated by the indication information is referred to as to-be-indicated information. During specific implementation, the to-be-indicated information may be indicated in a plurality of manners. For example, the to-be-indicated information may be directly indicated, for example, indicated by using the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be pre-defined, for example, pre-defined according to a protocol, or may be configured by a transmitting end device by sending configuration information to a receiving end device. The configuration information may include, for example, but not limited to one or a combination of at least two of RRC signaling, medium access control (medium access control, MAC) layer signaling, and physical layer signaling. The MAC layer signaling includes, for example, a medium access control control element (medium access control control element, MAC CE), and the physical layer signaling includes, for example, downlink control information (downlink control information, DCI).

(3) The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

In addition, in this application, unless otherwise specified, for same or similar parts in embodiments, refer to each other. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

(4) "Sending" and "receiving" in embodiments of this application represent signal transmission directions. A communication process between an entity A and an entity B is used as an example. In this application, that the entity A sends information to the entity B may be as follows: A directly sends the information to B, or A indirectly sends the information to B via another entity. Similarly, that the entity B receives the information from the entity A may be as follows: The entity B directly receives the information sent by the entity A, or the entity B indirectly receives, via another entity, the information sent by the entity A. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station. The "sending" may alternatively be understood as "outputting" of a chip interface, and the "receiving" may alternatively be understood as "inputting" of the chip interface.

In this application, unless otherwise specified, for same or similar parts in embodiments, refer to each other. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

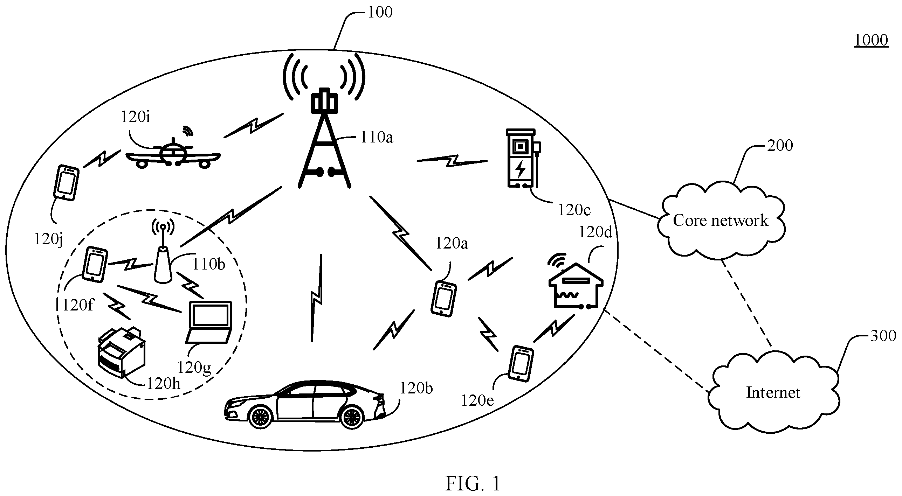

FIG. 1 is a diagram of an architecture of a communication system 1000 to which an embodiment of this application is applied.

As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner.

The RAN 100 may be an evolved universal terrestrial radio access (evolved universal terrestrial radio access, E-UTRA) system, an NR system, or a future radio access system defined in 3rd generation partnership project (3rd generation partnership project, 3GPP). The RAN 100 may further include the foregoing two or more different radio access systems. The RAN 100 may also be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes respectively implement a part of functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a MAC layer of the base station, and may further complete a part or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application.

For ease of description, the following is described by using an example in which the base station is used as a RAN node. It may be understood that, when the communication system includes an IAB network, the base station (that is, the RAN node) may be an IAB node.

A terminal is a device having a wireless transceiver function, and may send a signal to the base station, or receive a signal from the base station. The terminal may also be referred to as a terminal device, a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both of the spectrum below 6 GHz and the spectrum above 6 GHz. A spectrum resource used for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may be performed by a module (for example, a chip or a modem) in the terminal, or may be performed by an apparatus including the function of the terminal.

It should be understood that this application may be applied to a long term evolution (long term evolution, LTE) system, a new radio (new radio, NR) system, or a communication system (for example, 6G) evolved after 5G. The communication system includes a network device and a terminal device.

In the communication system shown in FIG. 1, a wireless transmission solution is used for both an access link (Access Link) and a backhaul link (Backhaul Link) by using an IAB technology, thereby reducing fiber deployment, and satisfying requirements such as an increased network capacity, broader coverage, and ultra-reliable and ultra-low latency.

In the IAB network, a relay node, or referred to as an IAB node (IAB-node), may provide a radio access service for a terminal device, and service data of the terminal device is transmitted from the IAB-node to an IAB donor (IAB-donor) through a wireless backhaul link. The IAB-node includes an MT part and a DU part. When being oriented to a parent node of the IAB-node, the IAB-node may serve as the terminal device, that is, a role of the MT. When being oriented to a child node of the IAB-node (where the child node may be another IAB-node or a regular terminal device), the IAB-node may be considered as the network device, that is, a role of the DU. The IAB-donor is an access network element having a complete base station (for example, gNB) function, and includes a CU and a DU. The IAB-donor is connected to a core network (for example, connected to a 5G core network) serving the terminal device.

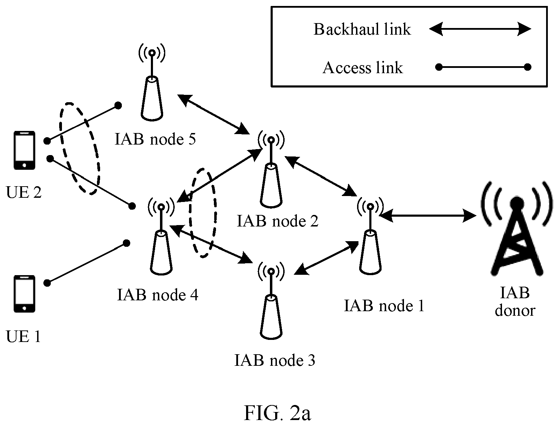

The following describes an IAB network with reference to implementation examples shown in FIG. 2a to FIG. 2h.

FIG. 2a to FIG. 2d below describe a basic concept of the IAB network.

FIG. 2a is a diagram of an IAB network.

In the IAB network shown in FIG. 2a, terminal devices include a UE 1 and a UE 2, and IAB nodes include an IAB node 1 (IAB Node 1) to an IAB node 5 (IAB Node 5) and an IAB donor (donor) node. A transmission path between any UE and the IAB-donor may include one or more IAB-nodes. Each IAB-node needs to maintain a wireless backhaul link oriented to a parent node and a radio link oriented to a child node. If a child node of an IAB-node is a terminal device (for example, the UE 1 or the UE 2 in FIG. 2a), a wireless access link exists between the IAB-node and the child node (that is, the UE). If a child node of an IAB-node is another IAB-node, a wireless backhaul link exists between the IAB-node and the child node (that is, the another IAB-node). For example, in FIG. 2a, in a path "UE 1→IAB-node 4→IAB-node 3→IAB-node 1→IAB-donor", the UE 1 accesses the IAB-node 4 through a wireless access link, the IAB-node 4 is connected to the IAB-node 3 through a wireless backhaul link, the IAB-node 3 is connected to the IAB-node 1 through a wireless backhaul link, and the IAB-node 1 is connected to the IAB-donor through a wireless backhaul link.

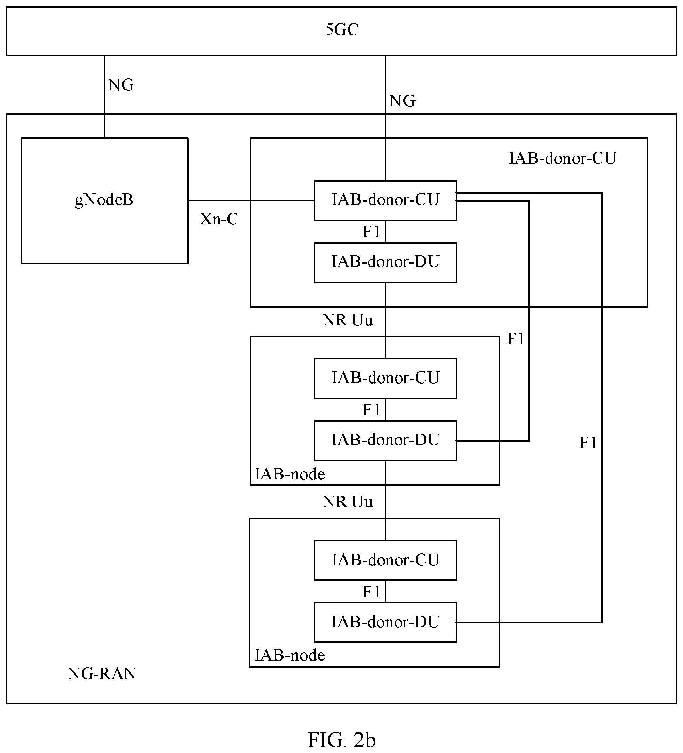

FIG. 2b is a diagram of implementing a wireless relay scenario through standalone (standalone, SA) networking.

As shown in FIG. 2b, communication nodes include a 5G core network (5G core, 5GC), a 5G access network device (denoted as a gNodeB in the figure), an IAB-donor, and one or more IAB-nodes. In FIG. 2b, an IAB-node DU (briefly described as an IAB-DU subsequently) is logically connected to an IAB-donor CU (briefly described as a CU subsequently) through an F1 interface. Actually, the connection between the IAB-DU and the CU is implemented through an NR Uu interface between an IAB-node MT of each hop and a DU in a parent node of this hop. However, because the IAB-DU can finally communicate with the CU, it may be considered that the F1 interface exists logically.

For example, the F1 interface may be used to support a user plane protocol (F1-user plane, F1-U) and a control plane protocol (F1-control plane, F1-C).

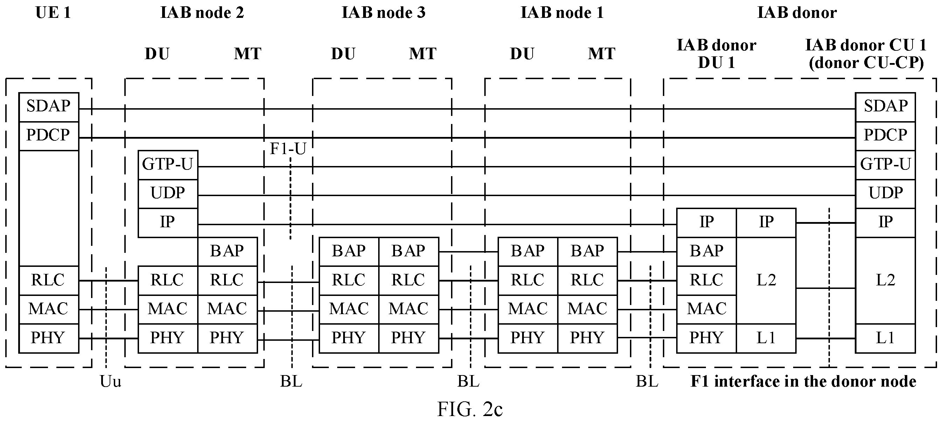

For example, as shown in FIG. 2c, the F1-U includes one or more of the following protocol layers: a general packet radio service protocol user plane (general packet radio service tunneling protocol user plane, GTP-U) protocol layer, a user datagram protocol (user datagram protocol, UDP) protocol layer, an internet protocol (internet protocol, IP) protocol layer, and the like. According to the F1-U, functions such as user plane data transmission and downlink transmission state feedback may be performed between the IAB-donor and the IAB-node.

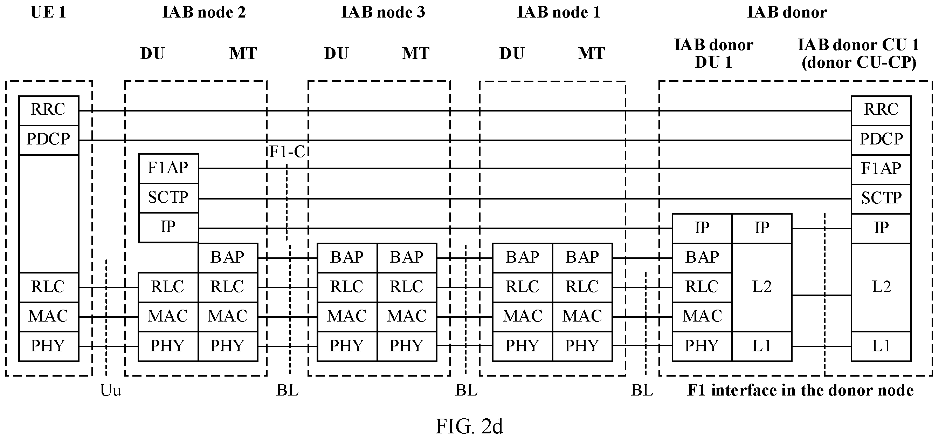

For another example, as shown in FIG. 2d, the F1-C includes one or more of the following protocol layers: an F1 application protocol (F1 application protocol, F1AP) protocol layer, a stream control transport protocol (stream control transport protocol, SCTP) protocol layer, an IP protocol layer, and the like. According to the F1-C, interface management, IAB-DU management, UE context related configuration, and the like may be performed between the IAB-donor and the IAB-node.

It should be understood that, in FIG. 2c and FIG. 2d, a UE communicates with an IAB node through a Uu interface, and different IAB nodes communicate with each other through a backhaul link (backhaul link, BL).

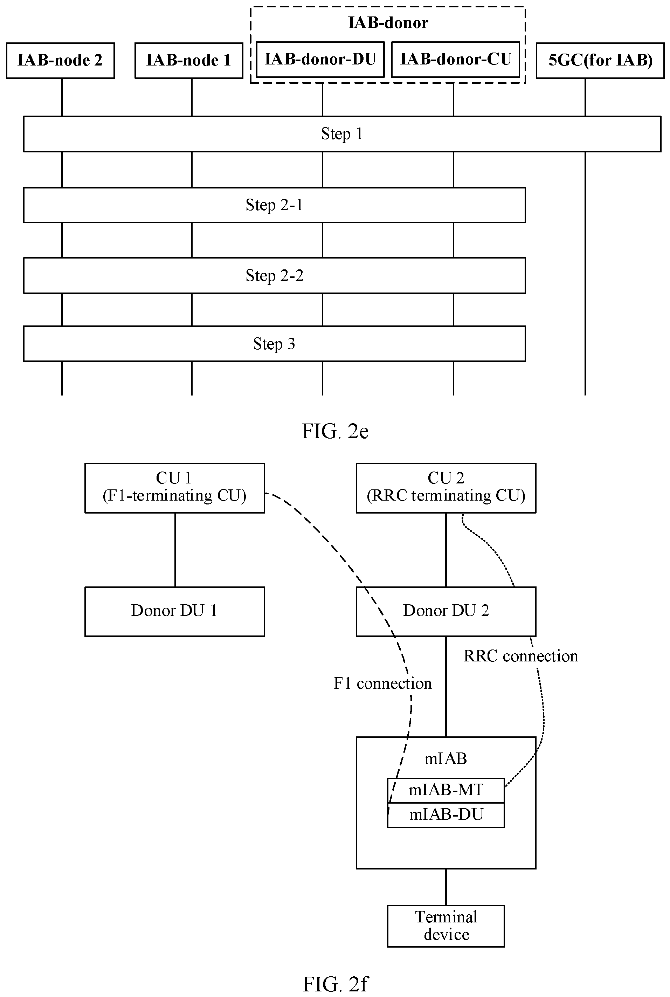

FIG. 2e below describes a network access procedure of an IAB node (IAB integration). In FIG. 2e, a network access procedure of an IAB-node 2 is used as an example. An IAB-node 1 is a parent node of the IAB-node 2 and has accessed a network.

The network access procedure of the IAB node may be summarized as follows.

Step 1: For a cell supporting an IAB function, broadcast an iab-support information element in a SIB 1. An IAB-MT selects and accesses the cell in which the iab-support information element exists in the SIB 1, sets up an RRC connection to a donor, and indicates that the IAB-MT is an IAB node when setting up the RRC connection (where an IAB node indication is carried in an RRCSetupComplete message). A donor-CU also carries the IAB node indication when sending an initial UE message (INITIAL UE MESSAGE) to a core network (which may be specifically an AMF network element in the core network). The AMF performs authentication (Authentication) on the IAB-MT, and includes an IAB authorized information element in a message indicating the donor-CU to set up an initial UE context (INITIAL CONTEXT SETUP REQUEST) related to the IAB-MT, to perform authorization (Authorization) on the IAB node. If the authentication succeeds, a value of IAB authorized is authorized (authorized); otherwise, a value of IAB authorized is not authorized (not authorized). The network access procedure of the IAB node is described herein. In this case, based on an assumption that the value of IAB authorized is authorized, subsequent steps are performed.

Step 2-1: The donor-CU configures a backhaul link RLC channel (BH RLC Channel) for the IAB-node by using an RRC message, and performs routing configuration. Specifically, in this case, only one default (default) BH RLC channel and one default route are configured, and are used for subsequent initial setup of an F1 interface (for example, in step 3). After the setup of the F1 interface is complete, more BH RLC channels and routing paths may be configured for the IAB-node by using an F1-C message, and are subsequently used for more F1-C messages and F1-U user plane data.

Step 2-2: In addition to the configuration for the IAB-node 2 in step 2-1, routing update may be further performed on a node (the IAB-node 1) between the IAB-node and the donor in step 2-2, to inform these nodes how to select a next-hop link and a next-hop RLC channel when receiving a data packet from the IAB-node 2 or a data packet to be sent to the IAB-node 2.

Step 3: An IAB-DU 2 in the IAB-node 2 initiates, to the donor-CU by using the default configuration obtained in step 2-1, an F1 SETUP REQUEST message carrying configuration information of a cell in a DU 2, to request to set up the F1 interface. The donor-CU replies the IAB-DU 2 with F1 SETUP RESPONSE, to activate the cell, and complete the setup of the F1 interface. In this way, the IAB-node 2 has been activated, and may provide a service for a terminal device and/or a next-hop IAB-MT.

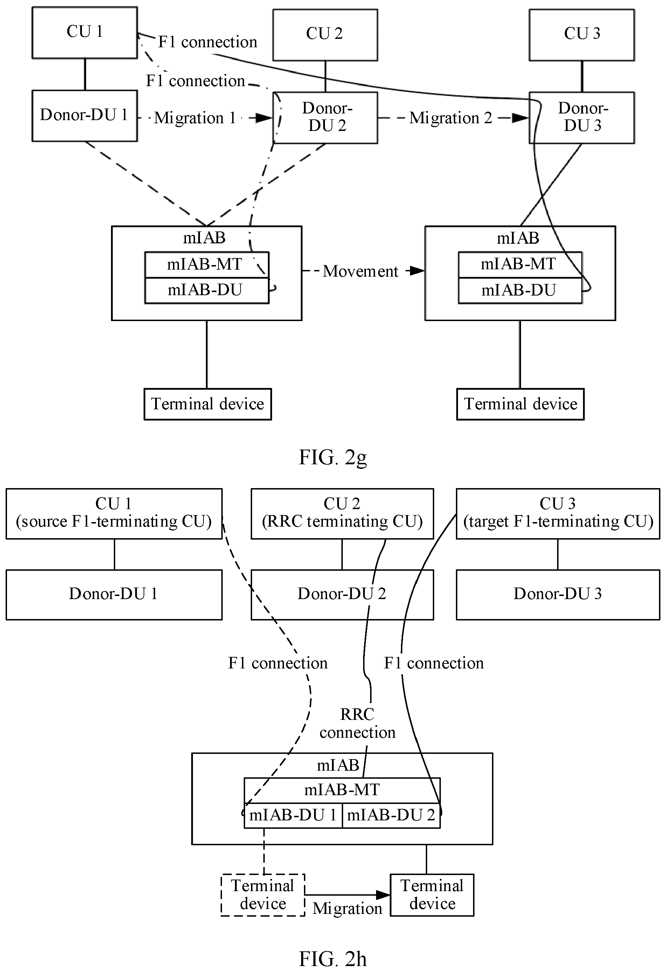

FIG. 2f, FIG. 2g, and FIG. 2h below describe an IAB node migration procedure.

FIG. 2f shows an implementation example in which an IAB node performs partial migration (Partial migration). In FIG. 2f, an IAB node performing migration may be referred to as a boundary node (boundary node), for example, an mIAB in the figure.

In FIG. 2f, before partial migration is performed, there is an RRC connection between an MT in the mIAB (denoted as an mIAB-MT) and a CU 1, an F1 interface exists between a DU in the mIAB (denoted as an mIAB-DU) and the CU 1, and communication is performed through a source path (mIAB-DU↔mIAB-MT↔donor-DU 1↔CU 1).

In FIG. 2f, in a process of performing partial migration, the mIAB-MT undergoes inter-CU cell handover, and sets up an RRC connection to a CU 2. However, to avoid introduction of a re-setup procedure of the F1 interface, the mIAB-DU still maintains the F1 interface with the CU 1, and does not set up the F1 interface with the CU 2. Therefore, a communication path between the CU 1 and the mIAB-DU changes to a cross-topology path: CU 1↔donor-DU 2↔mIAB-MT↔mIAB-DU.

Optionally, in FIG. 2f, the CU 1 and the CU 2 are respectively referred to as an F1-terminating CU and a non-F1-terminating CU (or an RRC terminating CU), and may also be respectively referred to as a source CU and a target CU. It should be noted that data does not pass through the CU 2 during transmission on the cross-topology path, and the CU 1 and the donor-DU 2 may directly communicate with each other via an IP network.

In addition, in FIG. 2f, when there is traffic transmission between the CU 1 and a UE, the CU 1 may send an IAB TRANSPORT MIGRATION MANAGEMENT REQUEST message to the CU 2, where the message is used to cause the CU 2 to help the CU 1 transmit traffic between the CU 1 and the UE. In other words, the F1-terminating CU sends the IAB TRANSPORT MIGRATION MANAGEMENT REQUEST message to the non-F1-terminating CU, to request to set up cross-topology traffic transmission. If the non-F1-terminating CU agrees to set up transmission, the non-F1-terminating CU replies the F1-terminating CU with an IAB TRANSPORT MIGRATION MANAGEMENT RESPONSE message. If the non-F1-terminating CU does not agree to set up transmission, the non-F1-terminating CU replies the F1-terminating CU with an IAB TRANSPORT MIGRATION MANAGEMENT REJECT message. If the F1-terminating CU or the non-F1-terminating CU subsequently expects to perform an operation such as QoS modification or withdrawal on the traffic, the F1-terminating CU or the non-F1-terminating CU may further exchange the IAB TRANSPORT MIGRATION MODIFICATION REQUEST/RESPONSE message.

FIG. 2g shows an implementation example in which an IAB node performs consecutive partial migration (consecutive partial migration). In FIG. 2G, migration of an mIAB node may be caused by movement (movement) of the mIAB node.

In FIG. 2g, migration 1 refers to a migration procedure between an mIAB-DU and a CU 1 shown in FIG. 2g, to be specific, a procedure of migration from a source communication path (mIAB-DU↔mIAB-MT↔donor-DU 1↔CU 1) to a target communication path (mIAB-DU↔mIAB-MT↔donor-DU 2↔CU 1).

After the migration 1, the mIAB-DU may perform a next migration procedure, that is, a procedure of migration 2. To be specific, the mIAB-MT is handed over from a CU 2 to a CU 3, but an F1 interface of the DU is consistently associated with the CU 1. As shown in FIG. 2g, the mIAB-node is directly connected to a donor-DU, but this is not limited. There may be another IAB node between the mIAB-node and the donor-DU. In addition, for how the MT is connected to the CU 2, the MT may be handed over from the CU 1 to the CU 2, or may be handed over from another CU to the CU 2 (which is not shown in the figure, but may be understood with reference to the following DU migration scenario).

FIG. 2h shows an implementation example in which an IAB node performs DU migration (DU migration).

In consideration of extensive mobility of the IAB node (for example, an mIAB node), when the mIAB-node moves far away, it may be difficult for an mIAB-DU to still maintain an IP connection to an initial CU, or transmission latency is significantly high. Therefore, the DU migration can be introduced to support extensive movement. As shown in FIG. 2h, an MT may consistently remain an RRC connection to a CU 2, and an F1 interface of a DU is migrated from a CU 1 to a CU 3. The figure shows an mIAB-DU 1 and an mIAB-DU 2, which are two logical DUs on a physical DU. The DU migration is implemented in the following manner: It is assumed that a source DU is the mIAB-DU 1. The mIAB-node generates a new logical DU: the mIAB-DU 2, and the mIAB-DU 2 sets up an F1 interface with the CU 3. In this case, the CU 1 sends a handover request of a terminal device to the CU 3 to hand over the terminal device from a cell of the mIAB-DU 1 to a cell of the mIAB-DU 2, and then, the CU 1 releases an F1 interface with the mIAB-DU 1. In this way, the DU migration has been complete.

In other words, the DU migration of the IAB node may be completely decoupled from MT migration of the IAB node. To be specific, a CU connected to a DU in the IAB node in the IAB node may be different from a CU connected to an MT in the IAB node. Therefore, in the consecutive partial migration, if an F1-terminating CU for the DU is consistently the CU 1, the MT is not necessarily handed over from the CU 1 to the CU 2 (although this is also possible). In the DU migration, the MT may be connected to the CU 2, and the DU is handed over from the CU 1 to the CU 3 (this is a common case, and as a special case, the CU 2 and the CU 1 or the CU 3 may be a same CU). A reason why it is assumed that the DU migration of the IAB node is completely decoupled from the MT migration of the IAB node is as follows: A procedure of the DU migration of the IAB node is complex (which requires generation of two logical DUs and sequential switching of UEs to a new logical DU), frequent migration of the DU in the IAB node is generally not recommended, and the CU connected to the DU in the IAB node may be a CU with a large control range. In contrast, the MT migration of the IAB node is essentially MT handover, which may be frequently performed, and selection of the CU connected to the MT in the IAB node may be determined based on signal quality. In other words, the CU connected to the MT in the IAB node may be different from the CU connected to the DU in the IAB node.

Optionally, based on a possibility that the DU migration of the IAB node is completely decoupled from the MT migration of the IAB node, in the IAB integration procedure, an RRC connection of the MT in the IAB node and an F1 interface of the DU in the IAB node may be selectively terminated at different CUs (for example, the CU connected to the DU in the IAB node may be a CU with a large control range, and the CU connected to the MT in the IAB node is a CU corresponding to a cell with best signal quality). That is, a topology in FIG. 2f is constructed once the IAB node accesses a network, in other words, for data transmission of the mIAB-DU, cross-topology traffic transmission needs to be performed through the CU connected to the mIAB-MT.

It can be learned from the foregoing implementation process that the CU connected to the DU in the IAB node and the CU connected to the MT in the IAB node may not be a same CU. In this case, how to implement data transmission of the IAB node is a technical problem to be urgently resolved. FIG. 2f is used as an example. For data transmission of the mIAB-DU, cross-topology traffic transmission may be performed through the CU connected to the mIAB-MT. However, a traffic transmission procedure can be determined only based on an exchange procedure of the IAB TRANSPORT MIGRATION MANAGEMENT REQUEST/RESPONSE message (that is, an IAB TRANSPORT MIGRATION MANAGEMENT procedure) between the CU 1 and the CU 2. For the CU 1, how to determine which CU is the CU 2 is an unresolved technical problem.

To resolve the foregoing problem, this application provides a communication method and a related device, to determine, based on information sent by a DU connected to an mIAB node, an identifier of a first CU connected to an MT in the mIAB node, and implement data transmission of the mIAB node in a topology of the first CU based on the identifier of the first CU. Detailed descriptions are provided below with reference to the accompanying drawings.

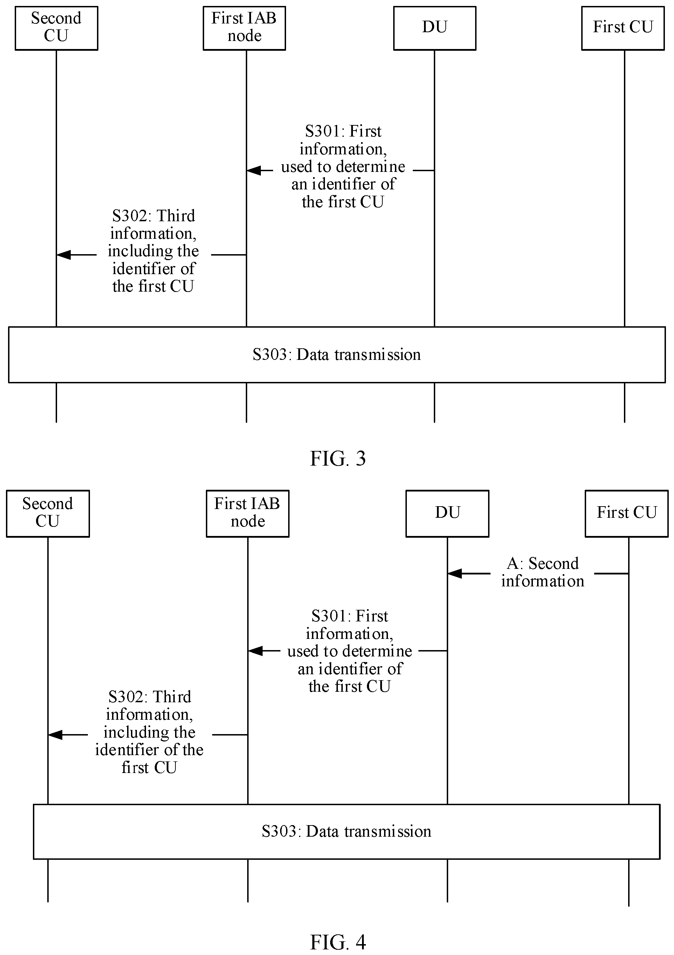

FIG. 3 is a diagram of a communication method according to this application. The method includes the following steps.

It should be noted that in FIG. 3, the method is illustrated by using an example in which a second CU, a first IAB node, a DU, and a first CU are used as execution bodies of this interaction illustration. However, the execution bodies of this interaction illustration are not limited in this application. For example, in FIG. 3 and corresponding implementations, an implementation process of step S301 may be performed by the DU, or may be performed by a chip, a chip system, or a processor that supports the DU in implementing the method, or may be performed by a logical module or software that can implement all or a part of functions of the DU. In FIG. 3 and the corresponding implementations, an implementation process of step S301 and step S302 may be performed by the first IAB node, or may be performed by a chip, a chip system, or a processor that supports the first IAB node in implementing the method, or may be performed by a logical module or software that can implement all or a part of functions of the first IAB node. Correspondingly, the first CU (and/or the second CU) that performs another step may alternatively be replaced with a chip, a chip system, a processor, or a logical module or software in the first CU (and/or the second CU).

Similarly, in the following steps shown in FIG. 4, FIG. 5, and FIG. 6, a device (for example, a second CU, a first IAB node, a DU, or a first CU) that performs the method may alternatively be replaced with a chip, a chip system, a processor, or a logical module or software in each device.

S301: The DU sends first information, and correspondingly, the first IAB node receives the first information. The first information is used to determine an identifier of the first CU, the DU connected to the first CU includes a first cell, and the first cell is a cell supporting mIAB node access.

S302: The first IAB node sends third information, and correspondingly, the second CU receives the third information. The third information includes the identifier of the first CU, the identifier of the first CU is used to set up data transmission in a topology of the first CU for the first IAB node, and the first IAB node is an mIAB node.

S303: Perform data transmission between the first CU and the second CU.

In this application, the mIAB node may be understood as an IAB node having a mobility capability. For example, a ground is used as a frame of reference, and the mIAB node may be an IAB node, for example, a vehicle-mounted device or a mobile station, that may move relative to the ground. The mIAB node may be replaced with the IAB node having the mobility capability, an IAB node having a mobility attribute, an IAB node, or the like.

It should be understood that the DU connected to the first CU includes one or more cells (for example, the first cell). It may be understood as that a signal of the one or more cells is received and sent through the DU. In other words, that the DU includes the one or more cells may be replaced with the following: The DU corresponds to the one or more cells, the one or more cells are generated by the DU, the DU generates the one or more cells, and so on.

It should be understood that a CU connected to an MT in the mIAB node is the first CU, and the connection between the MT and the first CU may be an RRC connection; and a CU connected to a DU in the mIAB node may be the second CU, and the connection between the DU and the second CU may be an F1 connection. Correspondingly, for the mIAB node, the F1 connection is terminated at the second CU, in other words, the second CU may be referred to as an F1-terminating CU for the mIAB node, and the first CU may be referred to as a non-F1-terminating CU for the mIAB node, or the first CU may be referred to as an RRC terminating CU for the mIAB node.

It should be understood that there may be N-hop (where N is a natural number) intermediate nodes (that is, N-hop IAB intermediate nodes) between the mIAB node and an IAB donor node. When N is 0, the DU sending the first information in step S301 is an IAB donor DU (IAB donor DU) in the IAB donor node. When N is 1, the DU sending the first information in step S301 is a DU in an intermediate node between the IAB donor node and the mIAB node. When N is greater than 1, the DU sending the first information in step S301 is a DU in an intermediate node connected to the mIAB node among N intermediate nodes between the IAB donor node and the mIAB node, that is, there may be (N-1)-hop intermediate nodes between the DU in the intermediate node connected to the mIAB node and the IAB donor node.

It should be noted that, that the identifier of the first CU is used to set up data transmission in the topology of the first CU for an mIAB node accessing the first cell may be understood as follows: Data transmission between the DU in the mIAB node and the second CU traverses the topology of the first CU, and the mIAB node may send, to the second CU in step S302, the third information including the identifier of the first CU, so that the second CU can perform interaction (for example, interaction in the foregoing mobile integrated access and backhaul transport migration management (IAB TRANSPORT MIGRATION MANAGEMENT) procedure described in FIG. 2f) with the first CU based on the identifier of the first CU, and a resource used to transmit traffic between the DU in the mIAB and the second CU can be set up in the topology of the first CU through the interaction procedure.

In other words, in step S303, the second CU may transmit data of the first IAB node by using the topology of the first CU. For example, a DU in the first IAB node may send data to the second CU through the DU connected to the first CU. For another example, the second CU may send data to a DU in the first IAB node through the DU connected to the first CU.

In an implementation example, the DU connected to the mIAB node (that is, the DU sending the first information) is an IAB donor DU. A data transmission path between the DU in the mIAB node and the second CU may include: DU in the mIAB node→MT in the mIAB node→IAB donor DU connected to the mIAB node→second CU.

In another implementation example, the DU connected to the mIAB node (that is, the DU sending the first information) is not an IAB donor DU. A data transmission path between the DU in the mIAB node and the second CU may include: DU in the mIAB node→MT in the mIAB node→DU connected to the mIAB node→(N-1)-hop intermediate nodes (where N is a natural number)→IAB donor DU→second CU.

In the foregoing examples, the IAB donor DU and the first CU are located in an IAB donor node connected to the MT. In the data transmission path between the DU in the mIAB node and the second CU, a path involving the IAB donor DU may be negotiated and determined through procedure interaction between the first CU and the second CU (where for example, the procedure may be the mobile integrated access and backhaul transport migration management (IAB TRANSPORT MIGRATION MANAGEMENT) procedure). Therefore, a manner in which the DU connected to the mIAB node sends the first information can cause the mIAB node to determine the identifier of the first CU based on the first information, and cause the first CU and the second CU to implement interaction in the foregoing procedure based on the identifier of the first CU, so that data transmission of the mIAB node is implemented through the data transmission path.

Optionally, data transmission may be performed on a path between the IAB donor DU and the second CU over an internet protocol (internet protocol, IP) network, in other words, data transmission may be performed between the DU connected to the first CU and the second CU over the IP network.

In a possible implementation, the first information includes at least one of the following:
the identifier of the first CU;
a length of the identifier of the first CU, where the length of the identifier of the first CU is used to determine the identifier of the first CU based on a second identifier, and the second identifier includes the identifier of the first CU and an identifier of the first cell; and
a length of the identifier of the first cell, where the length of the identifier of the first cell is used to determine the identifier of the first CU based on the second identifier.

Optionally, the identifier of the first CU may be an identifier of a network device in which the first CU is located. For example, in a new radio (new radio, NR) system, the network device in which the first CU is located may be a gNB, in other words, the identifier of the network device in which the first CU is located may be an identifier of the gNB (for example, a gNB ID and/or an IP address).

Optionally, in the new radio (new radio, NR) system, the second identifier may be a new radio cell global identifier (new radio cell global identifier, NCGI). For example, the identifier of the first CU may be denoted as the gNB ID, the NCGI may include the gNB ID and a cell ID, and a length of the gNB ID is variable (ranging from 22 to 32). Therefore, after the mIAB node obtains the length of the gNB ID (that is, the length of the identifier of the first CU), the mIAB node may read a value of the gNB ID based on the NCGI.

Optionally, compared with an implementation in which the first information includes the identifier of the first CU, a case in which the first information is the length of the identifier of the first CU (for example, the first information is carried in a gNB-ID-Length information element in a SIB 1) can reduce a quantity of bits occupied by the first information, thereby reducing overheads.

Based on the technical solution shown in FIG. 3, the first information sent by the DU in step S301 is used to determine the identifier of the first CU connected to the DU, and the identifier of the first CU is used to set up data transmission in the topology of the first CU for the mIAB node accessing the first cell. The first cell included in the DU is a cell supporting mIAB node access, in other words, the first CU connected to the DU is a CU connected to the MT in the mIAB node. In other words, after the DU sends the first information, the MT in the mIAB node can determine the identifier of the first CU based on the first information, and subsequently, the DU in the mIAB node can set up data transmission in the topology of the first CU based on the identifier of the first CU in step S302 and step S303. Therefore, when the CU connected to the DU in the mIAB node and the CU connected to the MT in the mIAB node are not a same CU, the mIAB node can determine, based on the information sent by the DU connected to the mIAB node, the identifier of the first CU connected to the MT in the mIAB node, and implement data transmission of the mIAB node in the topology of the first CU based on the identifier of the first CU.

In a possible implementation, in step S301 of the method shown in FIG. 3, the DU may send the first information in a plurality of manners, which are described below by using some implementation examples.

Implementation example 1: In step S301, the DU sends the first information under a condition that the DU determines that the first cell is a cell supporting mIAB node access (or under a condition that a broadcast message sent by the DU indicates that the first cell is a node supporting the mIAB node).

Specifically, under a condition that the first cell in the DU supports mIAB node access, the DU may send the identifier used to determine the first CU, so that after accessing the cell supporting mIAB node access, the mIAB node can determine the identifier of the first CU based on the first information, thereby implementing data transmission of the mIAB node in the topology of the first CU.

Optionally, in addition to the first cell, cells included in the DU may further include a second cell. Under a condition that the DU determines that the second cell does not support mIAB node access, the DU may not send first information corresponding to the second cell. In other words, the second cell does not support mIAB node access, and in this case, the DU does not need to send information used to determine an identifier of a CU connected to an MT in an mIAB node accessing the second cell.

Implementation example 2: Before step S301 in which the DU sends the first information, as shown in FIG. 4, the method further includes the following step.

Step A: The first CU sends second information, and correspondingly, the DU receives the second information. The second information satisfies at least one of the following:
the second information indicates that the mIAB node is allowed to access the first cell;
the second information indicates that the mIAB node is not barred from accessing the first cell; and
the second information indicates to send the first information.

Then, in step S301, the DU determines, based on the second information received in step A, to send the first information.

Optionally, the second information is carried in a gNB-CU configuration update message GNB-CU CONFIGURATION UPDATE. For example, a value of a carried mobile IAB barred information element is not barred, indicating that mIAB node access is allowed or not barred.

In a possible implementation of the implementation example 2, before step A shown in FIG. 4, the method may further include: The first IAB node sends a first message, and correspondingly, after the DU receives the first message, the DU may send the first message to the first CU. The first message indicates that setup of an RRC connection of the first IAB node is complete, and the first message includes indication information indicating that the first IAB node is an mIAB node. Then, the first CU may determine, based on the first message, to send the second information.

Optionally, the first message may be referred to as a message 5 (message 5, MSG5) or an RRC setup complete (RRCSetupComplete) message.

Specifically, after the first IAB node sets up the RRC connection to the first CU through the DU, the first CU may receive, through the DU, the message indicating that the setup of the RRC connection of the first IAB node is complete. In addition, the first message includes the indication information indicating that the first IAB node is an mIAB node, so that the first CU determines that there is an mIAB node that has accessed the first CU through the DU. Therefore, the first CU can determine, based on the first message, to send the second information, and the DU can send the first information based on the second information, so that the mIAB node can implement data transmission of the mIAB node in the topology of the first CU based on the first information.

It should be understood that, after receiving the first message, the DU may also read the mIAB indication information in the first message because the DU may have a specific RRC capability. Alternatively, the DU may subsequently forward the first message to the first CU, so that the first CU determines, based on the first message, that the setup of the RRC connection of the first IAB node is complete.

Optionally, because the first IAB node sends the first message to the first CU through the DU, the DU can also determine, based on the first message, that there is an mIAB node that has accessed the DU. Therefore, the DU may send the first information in step S301 without being triggered based on the second information, so that the mIAB node can implement data transmission of the mIAB node in the topology of the first CU based on the first information. In other words, in the implementation process shown in FIG. 4, step A is an optional step. For the DU, after receiving the first message, the DU may perform step S301.

In a possible implementation of the implementation example 2, in addition to being triggered based on the first message, the first CU may further determine, in another manner, to send the second information. For example, the another manner may include at least one of the following condition 1 to condition 8.

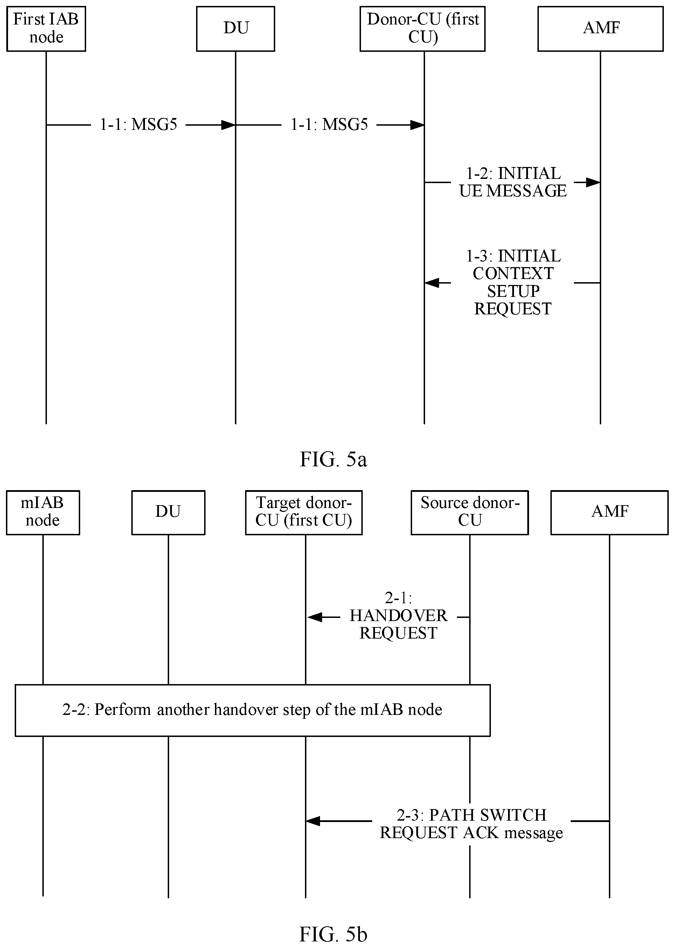

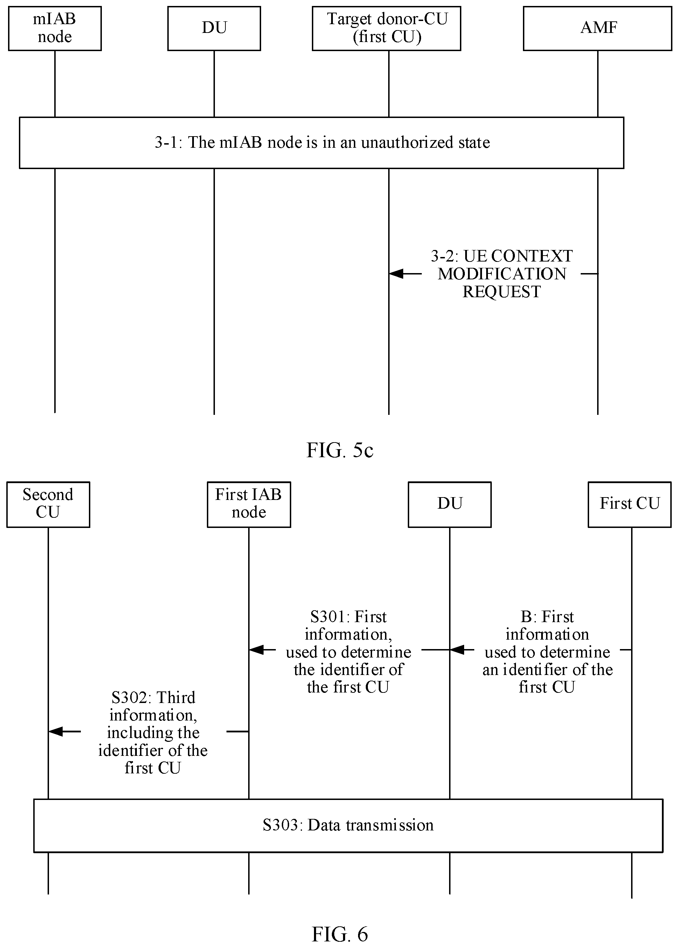

For ease of understanding of the following condition 1 to condition 8, the following first describes, with reference to FIG. 5a, FIG. 5b, and FIG. 5c, an IAB procedure related to a part of the conditions.

FIG. 5a shows an implementation procedure of initial access of an mIAB node, which includes the following steps.

Step 1-1: An mIAB-MT sends a MSG5 message (that is, the first message mentioned above, namely, an RRCSetupComplete message) to a donor-CU through a DU, where the MSG5 message carries indication information indicating that an IAB node sending the MSG5 message is an mIAB node.

Step 1-2: The donor-CU sends an INITIAL UE MESSAGE message to an AMF serving the mIAB-MT.

Step 1-3: The AMF network element serving the mIAB-MT sends an INITIAL CONTEXT SETUP REQUEST message to the donor-CU, where the message carries indication information indicating that authorization of the mobile IAB succeeds (mobile IAB authorized=authorized).

It should be understood that, in FIG. 5a, the mIAB-MT is an MT in the mIAB node, and the donor-CU is an implementation example of the first CU described above.

FIG. 5b shows an implementation process in which an mIAB node is handed over from a source donor central unit (Source donor-CU) to a target donor central unit (target donor-CU), which includes the following steps.

Step 2-1: The source donor-CU sends, to the target donor-CU, a HANDOVER REQUEST message related to an mIAB-MT, where the message carries at least one of mobile IAB indication information (mobile IAB indication) and indication information indicating that authorization of the mobile IAB succeeds (mobile IAB authorized=authorized).

Step 2-2: Perform another handover step of the mIAB-MT. For example, the MT randomly accesses a topology of the target donor-CU, and sets up an RRC connection. The target donor-CU sends a PATH SWITCH REQUEST message to an AMF, to request the AMF to change a transmission path from the source donor-CU to the target donor-CU.

Step 2-3: The AMF replies the target donor-CU with a PATH SWITCH REQUEST ACK message, where the message carries the indication information indicating that the authorization of the mobile IAB succeeds (mobile IAB authorized=authorized). In conclusion, it has been agreed that the PATH SWITCH REQUEST ACK message carries a latest authorization state of the mobile IAB after handover to the target donor-CU. Because whether the mobile IAB is authorized (allowed to operate) may be related to a base station accessed by the mobile IAB, after the mobile IAB is connected to the target donor-CU, the AMF includes latest authorization information in the PATH SWITCH REQUEST ACK message.

It should be understood that, in FIG. 5b, the target donor-CU is an implementation example of the first CU described above.

FIG. 5c shows an implementation process in which an authorization state of an mIAB-node connected to a donor-CU is changed from unauthorized to authorized.

Step 3-1: The mIAB-node is in the unauthorized state.

Step 3-2: An AMF serving an mIAB-MT sends, to the donor-CU, indication information indicating that the authorization state of the mIAB is changed from unauthorized to authorized. For example, a UE CONTEXT MODIFICATION REQUEST message carries indication information indicating that authorization of the mobile IAB succeeds (mobile IAB authorized=authorized). For example, whether the mobile IAB is authorized may be related to time information. Therefore, it is possible that the mobile IAB connected to a specific donor-CU is changed from unauthorized to authorized (or vice versa).

The following describes the condition 1 to the condition 8 described above.

Condition 1: The first CU receives first indication information from the DU, where the first indication information indicates that system information of a serving cell does not include the first information. Alternatively, the DU broadcasts system information of the first cell, where the system information of the first cell does not include the first information.

Specifically, before the DU sends the first information, the DU may send the first indication information and/or the system information of the first cell, so that the first CU can determine, based on the first indication information and/or the system information of the first cell, that the system information of the first cell does not include the first information. Then, after the first CU determines that the system information of the first cell does not include the first information, the first CU may send the second information to the DU in step A, and the DU can determine, based on the indication of the second information, to send the first information, so that an mIAB node accessing the DU can implement data transmission of the mIAB node in the topology of the first CU based on the first information.

Condition 2: The first CU receives second indication information from a core network element, where the second indication information indicates that authorization of the mIAB node succeeds.

Optionally, the second indication information is carried in step 1-3 in FIG. 5a, or the second indication information is carried in step 2-3 in FIG. 5b, or the second indication information is carried in step 3-2 in FIG. 5c.

Specifically, after the first CU receives the second indication information, the first CU may determine that the DU connected to the first CU needs to provide a service for the mIAB node. Therefore, the first CU may send the second information to the DU in step A, and the DU can determine, based on the indication of the second information, to send the first information, so that the mIAB node accessing the DU can implement data transmission of the mIAB node in the topology of the first CU based on the first information.

Condition 3: The first CU receives the second indication information and/or third indication information from a source CU for an MT in the first IAB node in step 2-2 in the procedure shown in FIG. 5b, where the third indication information indicates that the first IAB node is an mIAB node, and the first CU is a target CU for the MT in the first IAB node.

Specifically, after the first CU receives the second indication information and/or the third indication information, the first CU may determine that the DU connected to the first CU is highly likely to be accessed by the mIAB node. Therefore, the first CU may send the second information to the DU in step A, and the DU can determine, based on the indication of the second information, to send the first information, so that the mIAB node accessing the DU can implement data transmission of the mIAB node in the topology of the first CU based on the first information.

Condition 4: The first CU determines that the first CU is not an F1-terminating central unit (F1-terminating CU) for the first IAB node.

Condition 5: The first CU receives fourth indication information from a third CU, where the fourth indication information indicates that the third CU is an F1-terminating CU for the first IAB node.

Condition 6: The first CU receives fifth indication information from the MT in the first IAB node, where the fifth indication information indicates that the first CU is not an F1-terminating CU for the first IAB node.

Specifically, the first CU determines, based on any one of the condition 4 to the condition 6, that the first CU is not an F1-terminating CU for the DU in the mIAB node. Because the first CU is a CU (that is, an RRC terminating CU) connected to the MT in the mIAB node, the first CU may determine that transmission of data between the DU in the mIAB node and the F1-terminating CU may need to be performed by using the topology of the first CU. Therefore, the first CU may send the second information to the DU in step A, and the DU can determine, based on the indication of the second information, to send the first information, so that the mIAB node accessing the DU can implement data transmission of the mIAB node in the topology of the first CU based on the first information.

Condition 7: The first CU determines that the DU in the first IAB node is to perform DU migration. For an implementation process of the DU migration, refer to the foregoing descriptions in FIG. 2h.

Optionally, in the condition 7, the first CU may determine, in a plurality of manners, that the DU in the first IAB node is to perform DU migration. For example, the first CU receives indication information from a CU (or the MT in the first IAB node) connected to the DU in the first IAB node before the DU migration, where the indication information indicates that the DU in the first IAB node is to perform DU migration.

Specifically, when the first CU determines that the DU in the first IAB node is to perform DU migration, the first CU may determine that the DU in the first IAB node and the MT in the first IAB node may be connected to different CUs, that is, a CU connected to the DU in the first IAB node and a CU connected to the MT in the first IAB node may be different CUs. Therefore, the first CU may send the second information to the DU in step A, and the DU can determine, based on the indication of the second information, to send the first information, so that the mIAB node accessing the DU can implement data transmission of the mIAB node in the topology of the first CU based on the first information.

Condition 8: The first CU receives sixth indication information from the MT in the first IAB node or the F1-terminating CU for the first IAB node, where the sixth indication information indicates to request the first information.

Specifically, the MT in the first IAB node or the F1-terminating CU for the first IAB node may send, to the first CU, the sixth indication information indicating to request the first information, to trigger the first CU to determine to indicate the DU to send the first information. Therefore, when at least one of the foregoing conditions is satisfied, the first CU can determine that the DU connected to the first CU may be accessed by the mIAB node. Therefore, the first CU can send the second information to the DU in step A, and the DU can determine, based on the indication of the second information, to send the first information, so that the mIAB node accessing the DU can implement data transmission of the mIAB node in the topology of the first CU based on the first information.

Optionally, in the condition 8, when the sixth indication information is from the F1-terminating CU for the first IAB node, the F1-terminating CU for the first IAB node may be an F1-terminating CU before the DU migration. For example, in a scenario shown in FIG. 2h, the first IAB node may be the mIAB node in FIG. 2h, and the DU in the first IAB node may be handed over from the CU 1 to the CU 3. Correspondingly, in the condition 8, the sixth indication information may be from the CU 1, so that the CU 2 indicates the DU 2 to perform step S301 shown in FIG. 6, the MT in the first IAB node can obtain an identifier of the CU 2 and send the third information to the CU 3 in step S302, and subsequently, the mIAB node can perform data transmission by using a topology of the CU 2.

Optionally, in the implementation example 1 and the implementation example 2, the first cell is any cell that is in the DU and that supports mIAB node access; or the first cell is a cell that is in the DU and that is accessed by the mIAB node.

Optionally, in the implementation example 1 and the implementation example 2, the first information sent by the DU in step S301 is carried in a broadcast system message of the first cell. Specifically, the first information sent by the DU may be carried in the broadcast system message of the first cell, and the first information is transmitted in a broadcast manner, so that a plurality of mIAB nodes can all receive the first information sent in the broadcast manner, thereby reducing overheads. For example, the broadcast system information may be a SIB 1.

In a possible implementation of the implementation example 1 and the implementation example 2, before step S301 in which the DU determines the first information, the method further includes: receiving indication information that indicates the identifier of the first CU or an identifier length of the identifier of the first CU and that is configured by a network management system; and/or receiving, from the first CU, the indication information indicating the identifier of the first CU or the identifier length of the identifier of the first CU. Specifically, the DU may learn of the identifier of the first CU or the identifier length of the identifier of the first CU in a manner of the configuration by the network management system or a manner of receiving configuration from the first CU, so that the DU can send the first information based on the identifier of the first CU or the identifier length of the identifier of the first CU.

Optionally, the manner of the configuration by the network management system may be understood as a pre-configuration manner.

Implementation example 3: Before step S301 in which the DU sends the first information, as shown in FIG. 6, the method further includes the following step.

Step B: The first CU sends the first information, and correspondingly, the DU receives the first information. The first information is carried in an RRC message.

Optionally, that the first information is carried in the RRC message may be replaced with the following: The first information is carried in a unicast message.

It should be understood that because a communication protocol stack supported by the DU includes a PHY layer, a MAC layer, an RLC layer, and the like, and does not include an RRC layer, the first information received by the DU in step B and the first information sent by the DU in step S301 may be messages encapsulated at the PHY layer/MAC layer/RLC layer. Therefore, a manner in which the DU can forward the first information causes the mIAB node accessing the DU to obtain the first information.

It should be noted that in an implementation process shown in FIG. 6, the first CU may further determine, based on at least one of the following condition 1 to condition 8, to send the first information carried in the RRC message. Detailed descriptions are provided below.

Condition 1: The first CU receives first indication information from the DU, where the first indication information indicates that system information of a serving cell does not include the first information. Alternatively, the DU broadcasts system information of the first cell, where the system information of the first cell does not include the first information.

Specifically, before the DU sends the first information, the DU may send the first indication information and/or the system information of the first cell, so that the first CU can determine, based on the first indication information and/or the system information of the first cell, that the system information of the first cell does not include the first information. Then, after the first CU determines that the system information of the first cell does not include the first information, the first CU may send, to the first IAB node through the DU in step B, the first information carried in the RRC message. Because the first IAB node is an mIAB node, the mIAB node can implement data transmission in the topology of the first CU based on the first information.

Condition 2: The first CU receives second indication information from a core network element, where the second indication information indicates that authorization of the mIAB node succeeds.

Optionally, the second indication information is carried in step 1-3 in FIG. 5a, or the second indication information is carried in step 2-3 in FIG. 5b, or the second indication information is carried in step 3-2 in FIG. 5c.

Specifically, after the first CU receives the second indication information, the first CU may determine that the DU connected to the first CU needs to provide a service for the mIAB node. Therefore, the first CU may send, to the first IAB node through the DU in step B, the first information carried in the RRC message. Because the first IAB node is an mIAB node, the mIAB node can implement data transmission in the topology of the first CU based on the first information.

Condition 3: The first CU receives the second indication information and/or third indication information from a source CU for an MT in the first IAB node in step 2-2 in the procedure shown in FIG. 5b, where the third indication information indicates that the first IAB node is an mIAB node, and the first CU is a target CU for the MT in the first IAB node.

Specifically, after the first CU receives the second indication information and/or the third indication information, the first CU may determine that the DU connected to the first CU is highly likely to be accessed by the mIAB node. Therefore, the first CU may send, to the first IAB node through the DU in step B, the first information carried in the RRC message. Because the first IAB node is an mIAB node, the mIAB node can implement data transmission in the topology of the first CU based on the first information.

Condition 4: The first CU determines that the first CU is not an F1-terminating central unit (F1-terminating CU) for the first IAB node.

Condition 5: The first CU receives fourth indication information from a third CU, where the fourth indication information indicates that the third CU is an F1-terminating CU for the first IAB node.

Condition 6: The first CU receives fifth indication information from the MT in the first IAB node, where the fifth indication information indicates that the first CU is not an F1-terminating CU for the first IAB node.

Specifically, the first CU determines, based on any one of the condition 4 to the condition 6, that the first CU is not an F1-terminating CU for the DU in the mIAB node. Because the first CU is a CU (that is, an RRC terminating CU) connected to the MT in the mIAB node, the first CU may determine that transmission of data between the DU in the mIAB node and the F1-terminating CU may need to be performed by using the topology of the first CU. Therefore, the first CU may send, to the first IAB node through the DU in step B, the first information carried in the RRC message. Because the first IAB node is an mIAB node, the mIAB node can implement data transmission in the topology of the first CU based on the first information.

Condition 7: The first CU determines that the DU in the first IAB node is to perform DU migration. For an implementation process of the DU migration, refer to the foregoing descriptions in FIG. 2h.

Optionally, in the condition 7, the first CU may determine, in a plurality of manners, that the DU in the first IAB node is to perform DU migration. For example, the first CU receives indication information from a CU (or the MT in the first IAB node) connected to the DU in the first IAB node before the DU migration, where the indication information indicates that the DU in the first IAB node is to perform DU migration.

Specifically, when the first CU determines that the DU in the first IAB node is to perform DU migration, the first CU may determine that the DU in the first IAB node and the MT in the first IAB node may be connected to different CUs, that is, a CU connected to the DU in the first IAB node and a CU connected to the MT in the first IAB node may be different CUs. Therefore, the first CU may send, to the first IAB node through the DU in step B, the first information carried in the RRC message. Because the first IAB node is an mIAB node, the mIAB node can implement data transmission in the topology of the first CU based on the first information.

Condition 8: The first CU receives sixth indication information from the MT in the first IAB node or the F1-terminating CU for the first IAB node, where the sixth indication information indicates to request the first information.

Specifically, the MT in the first IAB node or the F1-terminating CU for the first IAB node may send, to the first CU, the sixth indication information indicating to request the first information, to trigger the first CU to determine to indicate the DU to send the first information. Therefore, when at least one of the foregoing conditions is satisfied, the first CU can determine that the DU connected to the first CU may be accessed by the mIAB node. Therefore, the first CU may send, to the first IAB node through the DU in step B, the first information carried in the RRC message. Because the first IAB node is an mIAB node, the mIAB node can implement data transmission in the topology of the first CU based on the first information.

Optionally, in the condition 8, when the sixth indication information is from the F1-terminating CU for the first IAB node, the F1-terminating CU for the first IAB node may be an F1-terminating CU before the DU migration. For example, in a scenario shown in FIG. 2h, the first IAB node may be the mIAB node in FIG. 2h, and the DU in the first IAB node may be handed over from the CU 1 to the CU 3. Correspondingly, in the condition 8, the sixth indication information may be from the CU 1, so that the CU 2 indicates the DU 2 to perform step S301 shown in FIG. 6, the MT in the first IAB node can obtain an identifier of the CU 2 and send the third information to the CU 3 in step S302, and subsequently, the mIAB node can perform data transmission by using a topology of the CU 2.

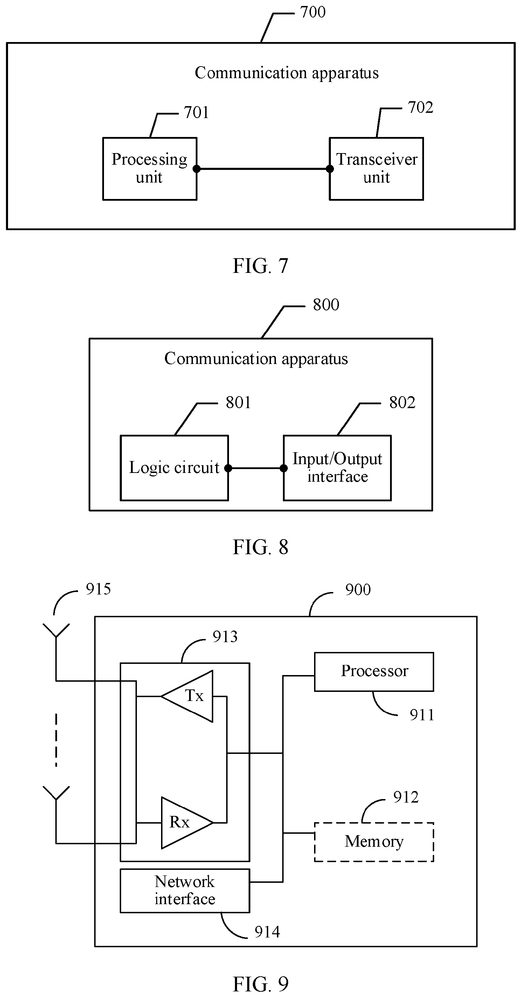

FIG. 7 provides a communication apparatus 700 according to an embodiment of this application. The communication apparatus 700 can implement functions of the communication apparatus (where the communication apparatus is the DU, the first CU, or the first IAB node) in the foregoing method embodiments, and therefore, can also achieve beneficial effects of the foregoing method embodiments. In this embodiment of this application, the communication apparatus 700 may be a communication apparatus, or may be an integrated circuit, a component, or the like, for example, a chip, in the communication apparatus.

In a possible implementation, when the apparatus 700 is configured to perform the method performed by the DU in FIG. 3 and the related embodiments, the apparatus 700 includes a processing unit 701 and a transceiver unit 702. The processing unit 701 is configured to determine first information, where the first information is used to determine an identifier of a first central unit CU, the distributed unit DU connected to the first CU includes a first cell, the first cell is a cell supporting mobile integrated access and backhaul mIAB node access, and the identifier of the first CU is used to set up data transmission in a topology of the first CU for an mIAB node accessing the first cell. The transceiver unit 702 is configured to send the first information.

In a possible implementation, when the apparatus 700 is configured to perform the method performed by the first CU in FIG. 4 and the related embodiments, the apparatus 700 includes a processing unit 701 and a transceiver unit 702. The processing unit 701 is configured to determine second information, where the second information satisfies at least one of the following:
the second information indicates that an mIAB node is allowed to access a serving cell;
the second information indicates that the mIAB node is not barred from accessing the serving cell; and
the second information indicates to send first information.

The transceiver unit 702 is configured to send the second information, where the second information is used to determine to send the first information, the first information is carried in a broadcast system message of the serving cell, the first information is used to determine an identifier of the first CU, and a DU connected to the first CU includes the serving cell.

In a possible implementation, when the apparatus 700 is configured to perform the method performed by the first CU in FIG. 6 and the related embodiments, the apparatus 700 includes a processing unit 701 and a transceiver unit 702. The processing unit 701 is configured to determine first information based on at least one of the following, where the first information is used to determine an identifier of the first CU, a DU connected to the first CU includes a serving cell of a first integrated access and backhaul IAB node, and the first IAB node is an mIAB node:
the transceiver unit 702 receives first indication information from the DU, where the first indication information indicates that system information of the serving cell does not include the first information;
the transceiver unit 702 receives second indication information from a core network element, where the second indication information indicates that authorization of the mIAB node succeeds;
the transceiver unit 702 receives the second indication information and/or third indication information from a source CU for an MT in the first IAB node, where the third indication information indicates that the first IAB node is an mIAB node, and the first CU is a target CU for the MT in the first IAB node;
the processing unit 701 determines that the first CU is not an F1-terminating central unit F1-terminating CU for the first IAB node;
the transceiver unit 702 receives fourth indication information from a third CU, where the fourth indication information indicates that the third CU is an F1-terminating CU for the first IAB node;
the transceiver unit 702 receives fifth indication information from the MT in the first IAB node, where the fifth indication information indicates that the first CU is not an F1-terminating CU for the first IAB node;
the processing unit 701 determines that a DU in the first IAB node is to perform DU migration; and
the transceiver unit 702 receives sixth indication information from the MT in the first IAB node or the F1-terminating CU for the first IAB node, where the sixth indication information indicates to request the first information.

The transceiver unit 702 is configured to send the first information, where the first information is carried in a radio resource control RRC message.

In a possible implementation, when the apparatus 700 is configured to perform the method performed by the first IAB node in any one of the foregoing embodiments, the apparatus 700 includes a processing unit 701 and a transceiver unit 702. The transceiver unit 702 is configured to receive first information, where the first information is from a serving cell, the first information is used to determine an identifier of a first CU, a DU connected to the first CU includes the serving cell, and the serving cell supports mobile integrated access and backhaul mIAB node access. The processing unit 701 is configured to determine the identifier of the first CU based on the first information. The transceiver unit 702 is further configured to send third information to a second CU connected to a DU in the first IAB node, where the third information includes the identifier of the first CU, the identifier of the first CU is used to set up data transmission in a topology of the first CU for the first IAB node, and the first IAB node is an mIAB node.

It should be noted that for details of content such as an information execution process of the unit of the communication apparatus 700, refer to descriptions in the foregoing method embodiments of this application. Details are not described herein again.

FIG. 8 is a diagram of another structure of a communication apparatus 800 according to this application. The communication apparatus 800 includes a logic circuit 801 and an input/output interface 802. The communication apparatus 800 may be a chip or an integrated circuit.

The transceiver unit 702 shown in FIG. 7 may be a communication interface. The communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit.

Optionally, the logic circuit 801 is configured to determine first information, where the first information is used to determine an identifier of a first central unit CU, a distributed unit DU connected to the first CU includes a first cell, the first cell is a cell supporting mobile integrated access and backhaul mIAB node access, and the identifier of the first CU is used to set up data transmission in a topology of the first CU for an mIAB node accessing the first cell. The input/output interface 802 is configured to send the first information.

Optionally, the logic circuit 801 is configured to determine second information, where the second information satisfies at least one of the following:
the second information indicates that an mIAB node is allowed to access a serving cell;
the second information indicates that the mIAB node is not barred from accessing the serving cell; and
the second information indicates to send first information.

The input/output interface 802 is configured to send the second information, where the second information is used to determine to send the first information, the first information is carried in a broadcast system message of the serving cell, the first information is used to determine an identifier of a first CU, and a DU connected to the first CU includes the serving cell.

Optionally, the logic circuit 801 is configured to determine first information based on at least one of the following, where the first information is used to determine an identifier of a first CU, a DU connected to the first CU includes a serving cell of a first integrated access and backhaul IAB node, and the first IAB node is an mIAB node:
the input/output interface 802 receives first indication information from the DU, where the first indication information indicates that system information of the serving cell does not include the first information;
the input/output interface 802 receives second indication information from a core network element, where the second indication information indicates that authorization of the mIAB node succeeds;
the input/output interface 802 receives the second indication information and/or third indication information from a source CU for an MT in the first IAB node, where the third indication information indicates that the first IAB node is an mIAB node, and the first CU is a target CU for the MT in the first IAB node;
the logic circuit 801 determines that the first CU is not an F1-terminating central unit F1-terminating CU for the first IAB node;
the input/output interface 802 receives fourth indication information from a third CU, where the fourth indication information indicates that the third CU is an F1-terminating CU for the first IAB node;
the input/output interface 802 receives fifth indication information from the MT in the first IAB node, where the fifth indication information indicates that the first CU is not an F1-terminating CU for the first IAB node;
the logic circuit 801 determines that a DU in the first IAB node is to perform DU migration; and
the input/output interface 802 receives sixth indication information from the MT in the first IAB node or the F1-terminating CU for the first IAB node, where the sixth indication information indicates to request the first information.

The input/output interface 802 is configured to send the first information, where the first information is carried in a radio resource control RRC message.

Optionally, the input/output interface 802 is configured to receive first information, where the first information is from a serving cell, the first information is used to determine an identifier of a first CU, a DU connected to the first CU includes the serving cell, and the serving cell supports mobile integrated access and backhaul mIAB node access. The logic circuit 801 is configured to determine the identifier of the first CU based on the first information. The input/output interface 802 is further configured to send third information to a second CU connected to a DU in a first IAB node, where the third information includes the identifier of the first CU, the identifier of the first CU is used to set up data transmission in a topology of the first CU for the first IAB node, and the first IAB node is an mIAB node.

The logic circuit 801 and the input/output interface 802 may further perform another step performed by the DU, the first CU, or the first IAB node in any embodiment, and achieve a corresponding beneficial effect. Details are not described herein again.

In a possible implementation, the processing unit 701 shown in FIG. 7 may be the logic circuit 801 in FIG. 8.

Optionally, the logic circuit 801 may be a processing apparatus, and a part of or all functions of the processing apparatus may be implemented by software. A part of or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory for storing a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller (microcontroller unit, MCU), a programmable logic device (programmable logic device, PLD), or another integrated chip, or any combination of the foregoing chips or processors.

FIG. 9 is a diagram of a structure of a communication apparatus 900 in the foregoing embodiments according to an embodiment of this application. The communication apparatus 900 may be specifically a communication apparatus serving as the DU, the first CU, or the first IAB node in the foregoing embodiments. For the structure of the communication apparatus, refer to the structure shown in FIG. 9.

The communication apparatus 900 includes at least one processor 911 and at least one network interface 914. Further optionally, the communication apparatus further includes at least one memory 912, at least one transceiver 913, and one or more antennas 915. The processor 911, the memory 912, the transceiver 913, and the network interface 914 are connected, for example, by using a bus. In this embodiment of this application, the connection may include various interfaces, transmission lines, buses, or the like. This is not limited in this embodiment. The antennas 915 are connected to the transceiver 913. The network interface 914 is configured to enable the communication apparatus to communicate with another communication device by using a communication link. For example, the network interface 914 may include a network interface between the communication apparatus and a core network device, for example, an S1 interface. The network interface may include a network interface between the communication apparatus and another communication apparatus (for example, another network device or a core network device), for example, an X2 or Xn interface.

The transceiver unit 702 shown in FIG. 7 may be a communication interface. The communication interface may be the network interface 914 in FIG. 9. The network interface 914 may include an input interface and an output interface. Alternatively, the network interface 914 may be a transceiver circuit, and the transceiver circuit may include an input interface circuit and an output interface circuit.

The processor 911 is mainly configured to: process a communication protocol and communication data; control the entire communication apparatus, execute a software program, and process data of the software program. For example, the processor 911 is configured to support the communication apparatus in performing actions described in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. The processor 911 in FIG. 9 may integrate functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 912 may exist independently, and is connected to the processor 911. Optionally, the memory 912 may be integrated with the processor 911, for example, integrated into a chip. The memory 912 can store program code for executing the technical solutions in embodiments of this application, and the processor 911 controls the execution. Various types of executed computer program code may also be considered as drivers of the processor 911.

FIG. 9 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 913 may be configured to support receiving or sending of a radio frequency signal between the communication apparatus and the terminal, and the transceiver 913 may be connected to the antennas 915. The transceiver 913 includes a transmitter Tx and a receiver Rx. Specifically, the one or more antennas 915 may receive a radio frequency signal. The receiver Rx of the transceiver 913 is configured to: receive the radio frequency signal from the antenna, convert the radio frequency signal into a digital baseband signal or a digital intermediate frequency signal, and provide the digital baseband signal or the digital intermediate frequency signal for the processor 911, so that the processor 911 further processes the digital baseband signal or the digital intermediate frequency signal, for example, performs demodulation processing and decoding processing. In addition, the transmitter Tx of the transceiver 913 is further configured to: receive a modulated digital baseband signal or a modulated digital intermediate frequency signal from the processor 911, convert the modulated digital baseband signal or the digital intermediate frequency signal into a radio frequency signal, and send the radio frequency signal through the one or more antennas 915. Specifically, the receiver Rx may selectively perform one-level or multi-level down frequency mixing and analog-to-digital conversion on the radio frequency signal to obtain the digital baseband signal or the digital intermediate frequency signal. An order of the down frequency mixing and the analog-to-digital conversion is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 913 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

It should be noted that the communication apparatus 900 shown in FIG. 9 may be specifically configured to implement steps implemented by the network device in the foregoing method embodiments, and achieve technical effects corresponding to the network device. For a specific implementation of the communication apparatus 900 shown in FIG. 9, refer to the descriptions in the foregoing method embodiments. Details are not described herein again.

An embodiment of this application further provides a computer-readable storage medium. The storage medium is configured to store one or more computer-executable instructions. When the computer-executable instructions are executed by a processor, the processor performs the method according to the possible implementations of the terminal device or the network device in the foregoing embodiments.

An embodiment of this application further provides a computer program product (or referred to as a computer program). When the computer program product is executed by a processor, the processor performs the method according to the possible implementations of the terminal device or the network device.

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the terminal device or the network device in the foregoing method embodiments.

An embodiment of this application further provides a communication system. The communication system includes the terminal device and the network device in any one of the foregoing embodiments.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part of or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the communication apparatus is a chip used in a terminal, the chip in the terminal implements functions of the terminal in the method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements functions of the base station in the method embodiments. That the chip in the base station receives information from a terminal may be understood as that the information is first received by another module (for example, a radio frequency module or an antenna) in the base station, and then sent to the chip in the base station by these modules. That the chip in the base station sends information to a terminal may be understood as that the information is first sent to another module (for example, a radio frequency module or an antenna) in the base station, and then sent to the terminal by these modules.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining first information, wherein the first information is used to determine an identifier of a first central unit CU, a distributed unit DU connected to the first CU comprises a first cell, the first cell is a cell supporting mobile integrated access and backhaul mIAB node access, and the identifier of the first CU is used to set up data transmission in a topology of the first CU for an mIAB node accessing the first cell; and
sending the first information.

2. The method according to claim 1, wherein before sending the first information, the method further comprises:
receiving a first message, wherein the first message indicates that setup of a radio resource control RRC connection of a first IAB node is complete, and the first message comprises indication information indicating that the first IAB node is an mIAB node; and
determining, based on the first message, to send the first information.

3. The method according to claim 1, wherein before sending the first information, the method further comprises:
receiving second information, wherein the second information is from the first CU, and the second information satisfies at least one of the following:
the second information indicates that the mIAB node is allowed to access the first cell;
the second information indicates that the mIAB node is not barred from accessing the first cell; and
the second information indicates to send the first information; and
determining, based on the second information, to send the first information.

4. The method according to any one of claims 1 to 3, wherein
the first cell is any cell that is in the DU and that supports mIAB node access; or
the first cell is a cell that is in the DU and that is accessed by the mIAB node.

5. The method according to any one of claims 1 to 4, wherein before the determining the first information, the method further comprises:
receiving indication information that indicates the identifier of the first CU or an identifier length of the identifier of the first CU and that is configured by a network management system;
and/or
receiving, from the first CU, the indication information indicating the identifier of the first CU or the identifier length of the identifier of the first CU.

6. The method according to any one of claims 1 to 5, wherein the first information is carried in a broadcast system message of the first cell.

7. The method according to claim 1, wherein the determining the first information comprises:
receiving the first information, wherein the first information is carried in an RRC message.

8. The method according to any one of claims 3 to 7, wherein before receiving the first information, the method further comprises:
sending first indication information, wherein the first indication information indicates that system information of the first cell does not comprise the first information;
and/or
broadcasting the system information of the first cell, wherein the system information of the first cell does not comprise the first information.

9. The method according to any one of claims 1 to 8, wherein the first information comprises at least one of the following:
the identifier of the first CU;
the length of the identifier of the first CU, wherein the length of the identifier of the first CU is used to determine the identifier of the first CU based on a second identifier, and the second identifier consists of the identifier of the first CU and an identifier of the first cell; and
a length of the identifier of the first cell, wherein the length of the identifier of the first cell is used to determine the identifier of the first CU based on the second identifier.

10. A communication method, comprising:
determining second information, wherein the second information satisfies at least one of the following:
the second information indicates that an mIAB node is allowed to access a serving cell;
the second information indicates that the mIAB node is not barred from accessing the serving cell; and
the second information indicates to send first information; and
sending the second information, wherein the second information is used to determine to send the first information, the first information is carried in a broadcast system message of the serving cell, the first information is used to determine an identifier of a first CU, and a DU connected to the first CU comprises the serving cell.

11. The method according to claim 10, wherein the method further comprises:
sending indication information indicating the identifier of the first CU or an identifier length of the identifier of the first CU.

12. The method according to claim 10 or 11, wherein the first information comprises at least one of the following:
the identifier of the first CU;
the length of the identifier of the first CU, wherein the length of the identifier of the first CU is used to determine the identifier of the first CU based on a second identifier, and the second identifier consists of the identifier of the first CU and an identifier of the serving cell; and
a length of the identifier of the serving cell, wherein the length of the identifier of the serving cell is used to determine the identifier of the first CU based on the second identifier.

13. The method according to any one of claims 10 to 12, wherein the determining the second information comprises:
determining the second information based on at least one of the following:
receiving first indication information from the DU, wherein the first indication information indicates that system information of the serving cell does not comprise the first information;
receiving second indication information from a core network element, wherein the second indication information indicates that authorization of the mIAB node succeeds;
receiving the second indication information and/or third indication information from a source CU for an MT in a first IAB node, wherein the third indication information indicates that the first IAB node is an mIAB node, and the first CU is a target CU for the MT in the first IAB node;
determining that the first CU is not an F1-terminating central unit F1-terminating CU for the first IAB node;
receiving fourth indication information from a third CU, wherein the fourth indication information indicates that the third CU is an F1-terminating CU for the first IAB node;
receiving fifth indication information from the MT in the first IAB node, wherein the fifth indication information indicates that the first CU is not an F1-terminating CU for the first IAB node;
determining that a DU in the first IAB node is to perform distributed unit migration DU migration; and
receiving sixth indication information from the MT in the first IAB node or the F1-terminating CU for the first IAB node, wherein the sixth indication information indicates to request the first information.

14. The method according to claim 13, wherein the second indication information from the core network element is carried in any one of the following:
an initial context setup request INITIAL CONTEXT SETUP REQUEST message, a path switch request acknowledgment PATH SWITCH REQUEST ACK message, and a user equipment context modification request UE CONTEXT MODIFICATION REQUEST message.

15. A communication method, comprising:
determining first information based on at least one of the following, wherein the first information is used to determine an identifier of a first CU, a DU connected to the first CU comprises a serving cell of a first integrated access and backhaul IAB node, and the first IAB node is an mIAB node:
receiving first indication information from the DU, wherein the first indication information indicates that system information of the serving cell does not comprise the first information;
receiving second indication information from a core network element, wherein the second indication information indicates that authorization of the mIAB node succeeds;
receiving the second indication information and/or third indication information from a source CU for an MT in the first IAB node, wherein the third indication information indicates that the first IAB node is an mIAB node, and the first CU is a target CU for the MT in the first IAB node;
determining that the first CU is not an F1-terminating central unit F1-terminating CU for the first IAB node;
receiving fourth indication information from a third CU, wherein the fourth indication information indicates that the third CU is an F1-terminating CU for the first IAB node;
receiving fifth indication information from the MT in the first IAB node, wherein the fifth indication information indicates that the first CU is not an F1-terminating CU for the first IAB node;
determining that a DU in the first IAB node is to perform distributed unit migration DU migration; and
receiving sixth indication information from the MT in the first IAB node or the F1-terminating CU for the first IAB node, wherein the sixth indication information indicates to request the first information; and
sending the first information, wherein the first information is carried in a radio resource control RRC message.

16. The method according to claim 15, wherein the second indication information from the core network element is carried in any one of the following:
an initial context setup request INITIAL CONTEXT SETUP REQUEST message, a path switch request acknowledgment PATH SWITCH REQUEST ACK message, and a user equipment context modification request UE CONTEXT MODIFICATION REQUEST message.

17. The method according to claim 15 or 16, wherein the first information comprises at least one of the following:
the identifier of the first CU;
a length of the identifier of the first CU, wherein the length of the identifier of the first CU is used to determine the identifier of the first CU based on a second identifier, and the second identifier consists of the identifier of the first CU and an identifier of the serving cell; and
a length of the identifier of the serving cell, wherein the length of the identifier of the serving cell is used to determine the identifier of the first CU based on the second identifier.

18. A communication apparatus, comprising a module configured to perform the method according to any one of claims 1 to 17.

19. A communication apparatus, comprising at least one processor, wherein the at least one processor is coupled to a memory, and the at least one processor is configured to perform the method according to any one of claims 1 to 17.

20. A readable storage medium, wherein the storage medium stores a computer program or instructions, and when the computer program or the instructions are executed by a communication apparatus, the method according to any one of claims 1 to 17 is implemented.
